(19) Europäisches Patentamt
European Patent Office
Office européen des brevets

(11) **EP 1 474 705 B1**

(12) **EUROPEAN PATENT SPECIFICATION**

(45) Date of publication and mention of the grant of the patent:
**24.04.2013 Bulletin 2013/17**

(21) Application number: **03729288.5**

(22) Date of filing: **09.01.2003**

(51) Int Cl.:
**G01V 1/38** (2006.01)

(86) International application number:
**PCT/GB2003/000049**

(87) International publication number:
**WO 2003/058281 (17.07.2003 Gazette 2003/29)**

(54) **PROCESSING SEISMIC DATA**

VERARBEITUNG SEISMISCHER DATEN

TRAITEMENT DE DONNEES SISMIQUES

(84) Designated Contracting States:
**AT IT NL**

(30) Priority: **14.01.2002 US 348872 P**
**28.05.2002 GB 0212293**

(43) Date of publication of application:
**10.11.2004 Bulletin 2004/46**

(73) Proprietor: **WesternGeco Seismic Holdings Limited**
**Road Town,**
**Tortola (VG)**

(72) Inventors:
• **ROBERTSSON, Johan, Olof Anders**
**High Cross**
**Cambridge CB3 0EL (GB)**
• **AMUNDSEN, Lasse**
**c/o Statoil AS**
**N-7005 Trondheim (NO)**
• **RØESTEN, Tage**
**c/o Statoil AS**
**N-7005 Trondheim (NO)**

(74) Representative: **Suckling, Andrew Michael et al**
**Marks & Clerk LLP**
**Fletcher House**
**Heatley Road**
**The Oxford Science Park**
**Oxford OX4 4GE (GB)**

(56) References cited:
**WO-A-02/01254**

• **AMUNDSEN L: "Elimination of free-surface related multiples without need of the source wavelet" GEOPHYSICS, JAN.-FEB. 2001, SOC. EXPLORATION GEOPHYSICISTS, USA, vol. 66, no. 1, February 2001 (2001-02), pages 327-341, XP002242704 ISSN: 0016-8033 cited in the application**
• **AMUNDSEN L ET AL: "EXTRACTION OF THE NORMAL COMPONENT OF THE PARTICLE VELOCITY FROM MARINE PRESSURE DATA" GEOPHYSICS, SOCIETY OF EXPLORATION GEOPHYSICISTS. TULSA, US, vol. 60, no. 1, 1995, pages 212-222, XP000507558 ISSN: 0016-8033 cited in the application**

**Description**

The present invention relates to processing seismic data and, in particular, to processing marine seismic data to reduce the effects of "ghost reflections". The present invention can be applied to processing both marine seismic data acquired in a flat sea and marine seismic data acquired in a rough sea.

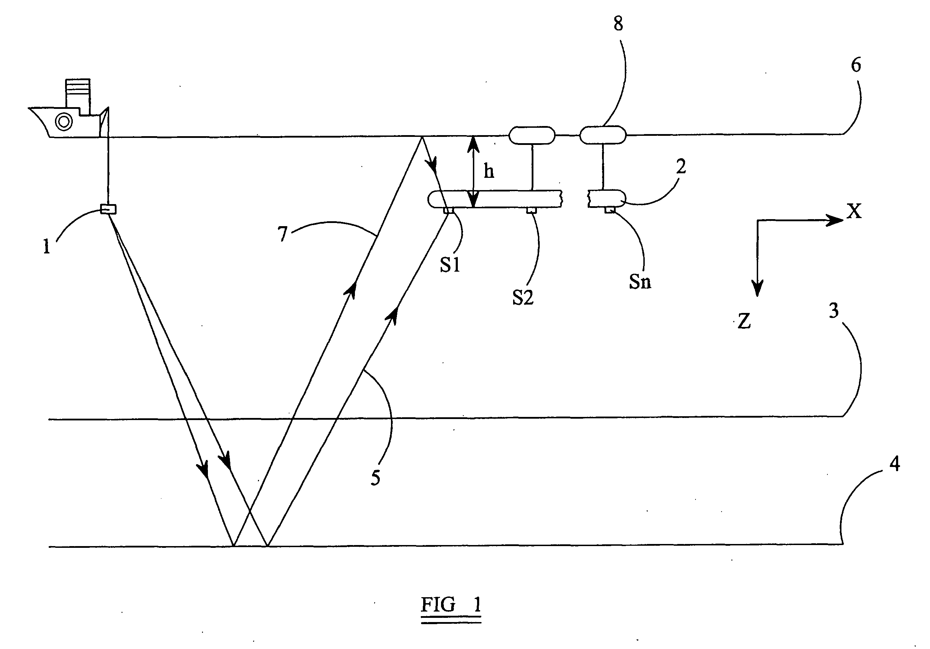

Figure 1 is a schematic diagram of a marine seismic survey in which seismic energy is emitted from a source 1 and detected by a seismic receiver 2 at a depth $h$ below the surface 6 of the sea. Energy emitted from the source is reflected by the seabed 3 or by a reflector 4 below the seabed 3 and is then detected by the receiver. This path of seismic energy is labelled 5 in Figure 1. Information about the geological structure of the earth's interior can be derived from the reflected seismic energy incident on the receiver

The seismic receiver 2 shown in Figure 1 is a streamer, which is a type of seismic receiver that is frequently used in marine seismic surveying. A streamer contains a plurality of sensors $S_1, S_2, ... S_N$ such as pressure sensors and/or particle velocity sensors distributed along its length, which may be some hundreds of metres, and is thus able to measure the reflected seismic energy at a number of points simultaneously. A streamer may be suspended from one or more floats 8, so that all the receivers of the streamer are at the same depth in a flat sea.

In addition to the desired path 5 of seismic energy shown in Figure 1, other seismic energy paths will occur as a result of seismic energy being reflected or scattered from the sea surface 6. These paths are known as "ghost reflections". For example, reference 7 in Figure 1 shows a ghost reflection in which the seismic energy reflected by the reflector 4 is not directly incident on the receiver 2, but undergoes a further reflection at the sea surface 6 before reaching the receiver. Down-going sea-surface ghost reflections are an undesirable source of contamination of seismic data, since they obscure the interpretation of the desired up-going reflections from the earth's interior.

As is well-known, the ghost signal will produce one or more "notches" in the frequency spectrum of seismic energy, with the frequency at which the notches occur depending on the depth of the receiver below the sea-surface.

The ghost signal reflected from the sea surface is delayed relative to the direct signal. There are two components to this delay: firstly, there is a 180° phase change upon reflection at the sea surface and, secondly, there is a time delay corresponding to the additional path length (which for a signal emitted in the vertical direction is 2z, or twice the depth of the receiver). The actual vertical far field signal is the sum of the direct signal and the ghost signal. The direct signal and the ghost signal will interfere, and this causes variations in the amplitude of the far field signal. For some frequencies, the interference is destructive and causes a zero amplitude or "notch" in the spectrum. This occurs at frequencies where the depth of the receiver is an even number of quarter wavelengths:

$$f_{\text{notch}} = (nc/2z),\ n = 0, 1, 2, 3\ldots$$

(where c is the speed of sound in water, $n$ is an integer giving the harmonic order, and z is the depth of the receiver below the sea surface).

Constructive interference occurs at frequencies exactly intermediate adjacent notch frequencies, and this leads to maxima in the amplitude at these frequencies, given by:

$$f_{\text{peak}} = (2n + 1)c/4z,\ n = 0, 1, 2, 3\ldots$$

The effect of the interference between the direct signal and the ghost signal can be thought of as applying a frequency domain "ghost filter" to the direct signal. The ghost filter has the following form:

$$g(f) = 1 + |r|^2 - 2|r|\cos(2zf/c)$$

(where r is the reflection coefficient at the sea surface). The amplitude spectrum of the ghost filter resembles a full-wave rectified sine wave, with zeros at the ghost notch frequencies and peaks of amplitude 2.0 (6 dB) at the peak frequencies.

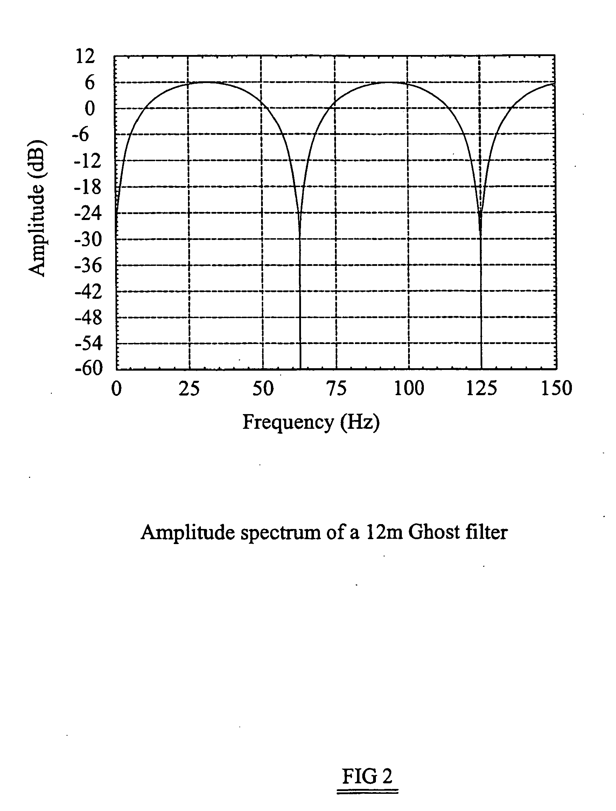

Figure 2 shows the amplitude of a typical ghost filter as a function of frequency. This figure shows the ghost filter for the case z = 12m, c = 1500m/s, and with a reflection coefficient of -1.0 at the sea surface. It will be seen that the amplitude decreases to 0 at the notch frequencies of 0Hz, 62.5Hz, 125Hz..., and that there are maxima in the amplitude at the peak frequencies of 31.25Hz, 93.75Hz...

Seismic deghosting is an old and long-standing problem. Traditionally, the primary goal of deghosting has been to broaden the bandwidth of the data through the notch frequencies. Many prior approaches to de-ghosting seismic data have used the assumptions of a perfectly flat sea surface, a streamer at a known depth below the sea surface, and vanishing pressure at the sea surface. In real seismic data acquisition however, the sea surface is very often rough. Deterministic algorithms that use an explicit mean streamer depth in the deghosting calculations will not work reliably in rough sea conditions. Even statistical methods cannot fully correct for the ghost reflections in rough sea conditions, owing to the time variant nature of the problem, as shown by E.Kragh and R.Laws in "Rough seas and statistical deconvolution", 62nd Annual EAGE Meeting (2001).

The effects of rough seas on the seismic data have recently been the subject of considerable research. In particular, R.Laws and E.Kragh have shown, in "Time-lapse seismic and the rough sea wavelet", 70th Ann. Int. Mtg of Soc. Exploration Geophysicists, Extended Abstracts pp 1603-1606 (2000), that errors arising in processing data acquired in rough sea conditions are significant for time-lapse seismic surveying and for the reliable acquisition of repeatable data for stratigraphic inversion.

As pointed out in UK patent application No 0015810.5, correction of the rough-sea surface ghost requires that the wavefield is completely separated into its up- and down-going components. The separation requires in general that the pressure and the vertical component of the particle velocity (or equivalently the vertical pressure gradient) are both recorded (see, for example, the equations given by L.Amundsen in Geophysics, Vol 58, pp1335-1348 (1993)).

Another possibility, as suggested by J.O.A.Robertsson and E.Kragh in "Rough sea deghosting using a single streamer and a pressure gradient approximation", submitted to Geophysics (2001) and further investigated by Røsten et al. in "Rough sea deghosting using a vertical particle velocity field approximation", submitted to 63rd Annual EAGE meeting, is to derive an estimate of the vertical component of the particle velocity from the pressure acquired at a receiver by using the fact that the pressure vanishes at the sea surface. The zero pressure along a contour vertically above the streamer may be regarded as a second streamer in a dual streamer configuration.

Robertsson and Kragh (above) and UK patent application No 0015810.5 suggest using a technique from synthetic finite-difference modelling of seismic wave propagation, known as the Lax-Wendroff correction, to derive equations for the vertical pressure gradient at a streamer in the vicinity of a rough sea surface. The equations express the vertical pressure gradient in terms of the pressure gradient along the streamer and the time-derivative of the pressure, both of which may readily be obtained from data acquired by the streamer. The seismic data may then be de-ghosted using the pressure and the approximation for the vertical pressure gradient. In contrast to other proposals for seismic deghosting, the method of Robertsson and Kragh is local: a short spatial filter (typically of length three) is used to deghost the pressure data acquired at a single receiver.

A first aspect of the present invention provides a method of determining a vertical component of particle velocity from seismic data acquired at a receiver disposed within a water column, the method comprising applying an operator to the seismic data to determine the vertical component of particle velocity of the seismic data wherein the seismic data are acquired at a depth beneath the surface of the water column of at least 0.4 times the minimum wavelength of seismic energy emitted by the seismic source used to acquire the seismic data, wherein the operator utilizes a spatial filter configured for processing seismic data based on the depth of the receiver. In a preferred embodiment, the operator is accurate for seismic data acquired at substantially any depth beneath the surface of the water column.

The present invention provides an improved method of estimating of the vertical particle velocity. Earlier methods of estimating the vertical component of the particle velocity have been applicable only for a restricted range for the depth of the receiver below the surface of the water column. As discussed below, the prior art method is accurate only if the depth of the receiver, below the surface of the water column, is no greater than $\lambda/3.5$, where $\lambda$ is the minimum wavelength of seismic energy used in the acquisition process. This severely restricts the choice of receiver arrays with which the method can be used. The present invention provides a method of estimating the vertical component of the particle velocity that can be used with data acquired at greater depths than hitherto.

In preferred embodiment, the method comprises determining the vertical component of particle velocity from the pressure acquired at the receiver using the following equation or an equation derived therefrom:

$$v_z\left(\omega, x, y, z\right) = -\frac{i}{\rho \omega z} \sum_m F'_m\left(k, z\right) D_2^m\left(x, y\right) * p\left(\omega, x, y, z\right) \qquad (2)$$

where $p$ is the acquired pressure wavefield, $v_z$ is the vertical component of particle velocity, $\omega$ is the angular frequency, $k(-\omega/\alpha)$ is the wavenumber, $\alpha$ is the P-wave velocity, $\rho$ is the density, $D_2$ is a differential operator,

$$F_m = F_m(k,z) = k^{-2m} \sum_{n=m}^{\infty} A_{r,m}(kz)^{2n}$$

and * is the 2D spatial convolution operator.

Equation (2) is an exact expression, and is accurate for any receiver depth. Use of equation (2) enables the vertical particle velocity to be obtained from seismic data acquired at any receiver depth.

In order to reduce the computation required to apply equation (2), it is possible to solve an equation derived from equation (2) in which the summation is truncated, rather than solving equation (2) exactly. Solving a truncated form of equation (2) reduces the computation required, but at the expense of accuracy. A truncated version of equation (2) will generally not be accurate for any receiver depth, but will be accurate only for a receiver depth less than some maximum value.

In an alternative preferred embodiment, the method comprises determining the vertical component of particle velocity from the pressure acquired at the receiver using the following equation or an equation derived therefrom:

$$v_z(\omega, x, z) \approx F_k * p(\omega, x, z),$$

where

$$\widetilde{F}_k = \min_{b_m, a_n} \sum_{k=-(K-1)}^{K-1} W_k \left| \frac{\Theta_{km} b_m}{\Phi_{kn} a_r} - F_k \right|^2$$

where $a_n$ and $b_m$ are the backward and forward filter coeffcients, $W_k$ are a set of positive weights, * is the 1-D spatial convolution operator and $F_k = F(k\Delta k_x)$ denote the desired discrete horizontal wavenumber response.

This filter is an approximation of equations (A34) and (A36) given in the appendix below. Equations (A34) and (A36) are exact, but are not valid for the case of a rough sea surface; this approximation allows them to be applied to the case of a rough sea surface.

In a preferred embodiment, the following filter is used:

$$\widetilde{F}_k = \min_{g_m} \sum_{k=0}^{K-1} W_k \left| \Gamma_{km} g_m - F_k \right|^2$$

where $\Gamma_{km} = cos(k\Delta k_x m\Delta x)$, $b_m = 0.5 g_m$ for $g_m = 1,2,...,M/2$ and $b_0 = g_0$.

The estimate of the vertical particle velocity provided by the present invention may be used to de-ghost the data. Alternatively, the estimate of the particle vertical velocity provided by the present invention may be used in other seismic data processing applications such as estimation of the source signature.

The method may further comprises determining the pressure in a horizontal direction perpendicular to the streamer from a derivative of the pressure in a direction along the streamer. This may be done using:

$$\frac{\partial^2}{\partial y^2} p(x_0, y_0) = \frac{1}{x_0} \frac{\partial}{\partial x} p(x_0, y_0)$$

where the streamer extends along the x-axis and the source is located at $(0, y_0)$.

In this equation, the receiver co-ordinates in the x-y plane are $(x_0, y_0)$. This enables the derivatives of pressure in the cross-line direction to be estimated even for a single streamer. In contrast, the prior art methods require at least two laterally separated streamers to determine derivatives in the cross-line direction.

A second aspect of the invention provides an apparatus for determining a vertical component of particle velocity from seismic data acquired at a receiver disposed within a water column, the apparatus comprising means for applying an operator to the seismic data to determine the vertical component of particle velocity of the seismic data, wherein the seismic data are acquired at a depth beneath the surface of the water column of at least 0.4 times the minimum wavelength of seismic energy emitted by the seismic source used to acquire the seismic data, wherein the operator utilizes a spatial filter configured for seismic data at the depth of the receiver.

The apparatus may comprise means for determining a derivative of the pressure in a horizontal direction perpendicular to the streamer from a derivative of the pressure in a direction along the streamer according to:

$$\frac{\partial^2}{\partial y^2} p(x_0, y_0) = \frac{1}{x_0} \frac{\partial}{\partial x} p(x_0, y_0)$$

where the streamer extends along the *x*-axis.

In a preferred embodiment the apparatus comprises a programmable data processor.

A third aspect of the invention provides a storage medium containing a program that, when executed by a data processor, causes the data processor to perform a method as defined above.

A further aspect of the present invention provides a method of determining a vertical component of particle velocity comprising determining the vertical component of particle velocity from the pressure acquired at the receiver using the following equation or an equation derived therefrom:

$$v_z(\omega, x, y, z) = -\frac{i}{\rho \omega z} \sum_m F_m(k, z) D_2^m(x, y) * p(\omega, x, y, z).$$

Preferred features of the invention are defmed in the dependent claims.

Preferred embodiments of the present invention will now be described by way of illustrative example with reference to the accompanying drawings in which:

Figure 1 is a schematic sectional view of a towed marine seismic survey;

Figure 2 illustrates the effect of ghost reflections on the amplitude spectrum of seismic energy emitted by the source in the survey of Figure 1;

Figure 3 is a block flow diagram of a method of the present invention;

Figure 4 is a schematic plan view of the seismic surveying arrangement of Figure 1;

Figures 5(a) to 5(d) illustrate the results of a de-ghosting method of the present invention for a streamer at a depth of 6m;

Figures 6(a) to 6(d) illustrate the results of a de-ghosting method of the present invention for a streamer at a depth of 10m; and

Figure 7 is a schematic block sectional diagram of an apparatus according to the present invention.

Removing the effects of ghost reflections from pressure data acquired at a seismic receiver disposed within a water column is equivalent to separating the acquired pressure into its up-going and down-going components. The de-ghosted component of the acquired pressure is the up-going component. Various methods for separating acquired pressure data into up-going and down-going components have been proposed, including the following:

$$\tilde{P} = \frac{1}{2}\left[ P - \frac{\rho \omega}{k_z} V_z \right] \qquad (1)$$

In this equation, $\tilde{P}$ denotes the spatial Fourier transform of the de-ghosted (up-going) component of the acquired pressure, $P$ denotes the spatial Fourier transform of the acquired pressure $p$, $\rho$ denotes the density of the water column, $\omega$ denotes the angular frequency, $k_z$ is the vertical wave number, and $V_z$ is the spatial Fourier transform of the vertical component of the particle velocity $v_z$.

$V_z$, $P$ and $\tilde{P}$ will in general be functions of the horizontal wave numbers $k_x$ and $k_y$, the angular frequency, and the depth $z$ of the receiver. The equation (1) above is valid for all wave numbers.

One prior art method of de-ghosting pressure data acquired at a seismic receiver disposed within a water column is to use equation (1) to determine the de-ghosted (up-going) pressure component. This method has had the disadvantage that, until now, a sufficiently accurate expression for $v_z$ has not been available. Although various approximate formulations for computing $v_z$ have been proposed, these have generally only been applicable for a limited range of receiver depth or frequency of seismic energy. For example, one prior art approximation for $v_z$ is that given in equations (A1) and (A2) in the appendix, and this prior art approximation is only accurate if the receiver depth is less than approximately $\lambda/3.5$, where $\lambda$ is the minimum wavelength of seismic energy. This approximation also requires that the separation between adjacent receivers on a streamer is around 3m or less. Furthermore, this prior method is fundamentally limited to frequencies of seismic energy below the first ghost notch frequency so that, for example, for a streamer depth of 6m equation (A1) is accurate up to only approximately 70Hz.

The present invention provides more accurate expressions for the vertical particle velocity $v_z$, and thus enables more accurate de-ghosting of pressure data using equation (1).

According to the present invention, the vertical component of the required particle velocity is determined using the following equation, or using an equation derived therefrom:

$$v_z = -\frac{i}{p\,\omega z}\sum_m F_m(k,z)D_2^m(x,y)* p, \qquad (2)$$

In equation (2), the functions $F_m(k,z)$ are functions that are independent of the horizontal spatial co-ordinates and are given by:

$$F_m = F_m(k,z) = k^{-2m}\sum_{n=m}^{\infty} A_{nm}(kz)^{2n} \qquad (3)$$

where

$$A_{nm} = \frac{(-1)^n 2^{2n} B_{2n}}{(2n)!}\binom{n}{m} \qquad (4)$$

In equation (4), $A_{nm}$ are scalar quantities, $B_n$ is the $n^{th}$ Bernoulli number, and n! is the factorial of n.

In equation (2) above $D_2$ is a differential operator, and * denotes the two-dimension spatial convolution operator. The components $p$, $v_z$ are in general functions of $\omega$, $x$, $y$ and $z$.

Differentiation generally leads to large amplification of high wavenumbers. Hence, in practical situations a bandlimited version of a differential operator is preferably used for $D_2$.

The expression for $v_z$ given in equation (2) is valid for all receiver depths in the water column. Use of equation (2) to determine the vertical component of the particle velocity enables accurate determination of the vertical component of the particle velocity for pressure data acquired at any depth in a water column. This in turn enables further processing steps that require knowledge of the vertical component of the particle velocity - such as de-ghosting, for example - to be carried out accurately for pressure data acquired at any depth in a water column.

The present invention is not limited to use of the exact equation (2) to obtain the vertical component of the vertical particle velocity. The invention also envisages that the vertical component of the vertical particle velocity may be obtained using an equation derived from equation (2) such as, for example, an approximate solution to equation (2).

A special case of equation (2) arises when $m$ is finite, and extends from zero to $M$. In this case, and assuming infinite bandwidth, equation (2) may be re-written as:

$$v_z \approx -\frac{i}{p\varpi z}\sum_{m=0}^{M}F_m(k,z)\left(\frac{\partial^2}{\partial x^2}+\frac{\partial^2}{\partial y^2}\right)^m p,$$ (6)

The functions $F_m$ are given in equation (3) above as infinite series. The functions $F_m$ may also be written analytically in terms of trigonometric functions, and examples for $F_0$, $F_1$, $F_2$ are given in equations (A8), (A9) and (A10) below.

It will be seen that the $x$- and $y$- variables in equation (6) are de-coupled from z. This indicates that equation (6) is valid for a rough surface of the water column, as well as for a flat surface of the water column. This preferred embodiment of the present invention therefore provides a further advantage, since it enables accurate de-ghosting of pressure data acquired in rough sea conditions to be carried out, for any receiver depth in the water column.

In the case where $M = 2$ equation (6) reduces to:

$$v_z \approx -\frac{i}{\rho \omega z}\left[F_0 + F_1\left(\frac{\partial^2}{\partial x^2}+\frac{\partial^2}{\partial y^2}\right) + F_2\left(\frac{\partial^2}{\partial x^2}+\frac{\partial^2}{\partial y^2}\right)^2\right]p$$ (7)

The spatial derivatives in equations (6) and (7) may be estimated from the pressure acquired at two or more receivers. For example, the pressure derivative along the $x$-axis (which is assumed to coincide with the axis of the streamer) may be determined from the pressure recorded at the same time at different receivers along the streamer.

The preferred method of determining the spatial derivatives will depend on the spatial sampling interval - that is, the distance between adjacent sensors on a streamer. Where there is a low sampling interval - that is the sensors are closely spaced and so provide densely sampled pressure data, the spatial derivatives may be represented by classical central finite - difference approximations. In the case of equation (7), for example, the second-order spatial derivatives may be estimated using a three-point finite difference operator that estimates the spatial derivative in the x-direction of the pressure at one receiver from the pressure values acquired at that receiver and at the adjacent receiver on each side (this is sometimes known as an iterative filter of length 3).

For a coarse receiver spacing, the horizontal derivatives are most preferably implemented as numerically optimised difference operators, or using Fourier techniques. In a Fourier technique, the derivatives are obtained by Fourier transforming the pressure to the wavenumber domain, multiplying by the negative square of the wavenumber (for the second derivative), and inverse Fourier transforming the result.

Equations (6) and (7) are derived from, and are particular cases of, equation (2), in which the variable $m$ is chosen to be finite. Further special cases occur when the variables $m$ and $n$ in equation (2) are both chosen to be finite, with $m$ varying from 0 to M and with n varying from m to $N$ ($m$). In this case, equation (2) reduces to the following:

$$v_z \approx \frac{i}{p\varpi z}\sum_{m=0}^{M}F_m(k,z)\left(\frac{\partial^2}{\partial x^2}+\frac{\partial^2}{\partial y^2}\right)^m p$$ (8)

In equation (8), the functions $F_m$ have the same general form as given in equation (3), but the summation over n is now carried out from m to $N(m)$, as shown in equation (A20) below.

If we choose $M = 1$, $N(0) = 2$, and $N(1) = 1$, equation (8) reduces to the following:

$$v_z \approx -\frac{i}{p\varpi z}\left[A_{00} + A_{10}(kz)^2 + A_{11}z^2\left(\frac{\partial^2}{\partial x^2}+\frac{\partial^2}{\partial y^2}\right)\right]p$$ (9)

where the scalar coefficients have the following values: $A_{00} = 1$, $A_{10} = A_{11} = -1/3$.

It will be seen that equation (9) has the same general structure as the prior art equation (A1) given in the Appendix below. The scalar coefficients $A_{10}$ and $A_{11}$ in equation (9), however differ from the scalar coefficients in equation (A1). This has the significant effect that equation (9) is valid for greater streamer depths than equation (A1).

(Equation (2) above is valid for all streamer depths, but the depth range over which an approximate solution to equation (2) will be valid varies from one approximate solution to another.) Equation (9) is valid at depths up to approximately $\lambda/2.5$, where $\lambda$ is the minimum wavelength, whereas equation (A1) requires that the streamer depth is no greater than approximately $\lambda/3.5$.

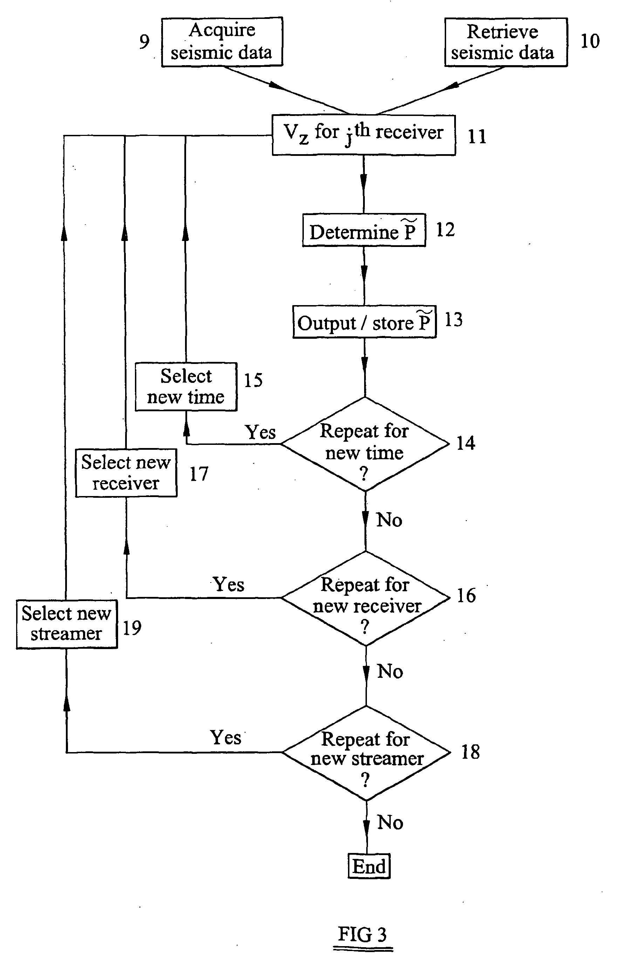

Figure 3 is a block flow diagram illustrating one method of the present invention.

Initially, at step 9, seismic data are acquired at a plurality of receivers disposed within a water column. In general, step 9 will consist of acquiring seismic data using a seismic surveying arrangement of the general type shown in Figure 1 in which a plurality of seismic receivers S1... SN are disposed on a streamer 2 that is set at a depth $h$ below the surface of the water column. The data may be acquired with a single streamer, or they may be acquired with two or more streamers that are separated laterally (that is, separated along the $y$-axis) from one another.

The invention may alternatively be used to process pre-existing seismic data. Step 9 of acquiring seismic data may therefore be replaced by step 10 of retrieving pre-existing seismic data from storage.

At step 11, the vertical component of the particle velocity $v_z$ is calculated for one receiver (for example the $j^{th}$ receiver). Step 11 is carried out using equation (2), or using any equation derived from equation (2) such as equation (6), (7), (8) or (9). As outlined above, the values of the pressure derivatives occurring in these equations are estimated using pressure values acquired at two or more receivers.

Once the vertical component of the particle velocity has been determined for the $j^{th}$ receiver, the pressure data acquired at the $j^{th}$ receiver may then be de-ghosted at step 12. The de-ghosting step is carried out using equation (1), with the component $V_z$ being obtained by a spatial Fourier transform on the output of step 11.

At step 13 the results of step 12 are output, for example by display by an operator, or are alternatively stored for subsequent retrieval.

A receiver $S_i$ on the streamer 2 of Figure 1 will acquire data by sampling the incident seismic wavefield at discrete time values and so will record the values of the wavefield at times to, to + $t_s$, to + 2 $t_s$...., where $t_s$ is the sampling time. Steps 11 to 13 have been performed on data acquired at one particular sampling time. At step 14, therefore it is determined whether the de-ghosting should be repeated for data acquired by the receiver at a different sampling time. If this yields a "yes" determination, a new sampling time is selected at step 15, and steps 11-13 are repeated for data acquired at the new time. This process is repeated until a "no" determination is obtained at step 14.

At step 16 it is determined whether steps 11, 12 and 13 should be repeated for data acquired by another receiver on the streamer. If step 16 yields a "yes" determination, a new receiver is selected at step 17, and steps 11 to 14 and, if necessary step 15, are repeated for the new receiver. This loop is repeated until a "no" determination is obtained at step 16.

If it is desired systematically to de-ghost data acquired by every receiver on a streamer, the index j may initially be set to 1, step 16 may consist in determining whether the index j is equal to the total number of receivers J on the receiver, and step 17 may consist of incrementing j by 1.

When a "no" determination is obtained at step 16, step 18 then determines whether the process should be repeated for data acquired by another streamer. If this step yields a "yes" determination, a new streamer is selected at step 19, and steps 11-17 are then repeated for the receivers on the new selected streamer.

Where the method of the present invention is applied to data acquired using only a single streamer, step 18 may be omitted and step 19 is not applicable.

As noted above, the present invention may be applied to seismic data acquired using only a single streamer - that is, to seismic data acquired at receivers all located at the same y-co-ordinate value. In this case, it would initially appear difficult to obtain the spatial derivatives in the y-direction (perpendicular to the length of the streamer), that are required to allow solution of, for example, equations (6), (7), (8) or (9). A further aspect of the present invention, therefore, provides a method of estimating the necessary derivatives in the y-direction a derivative of the pressure along the streamer. A streamer generally contains a large number of pressure sensors disposed at regular intervals along the length of the streamer, and the spatial derivative of the pressure along the streamer can readily be estimated from the pressure acquired at the sensors. The present invention makes it possible to estimate a spatial derivative in a direction perpendicular to the streamer from data acquired for a single streamer, from a spatial derivative of the pressure along the streamer.

The method of estimating a spatial derivative in a direction perpendicular to the streamer from data acquired for a single streamer may be carried out in connection with a determination of the vertical component of the particle velocity according to the method described above, but it is not limited to use in connection with determination of the vertical component of the particle velocity.

In a preferred embodiment, a spatial derivative in a direction perpendicular to the streamer may be estimated using the following equation:

$$\frac{\partial^2}{\partial y^2} p\big(x_0, y_0\big) = \frac{1}{x_0} \frac{\partial}{\partial x} p\big(x_0, y_0\big) \tag{10}$$

The derivation of equation 10 is explained in detail in the Appendix below.

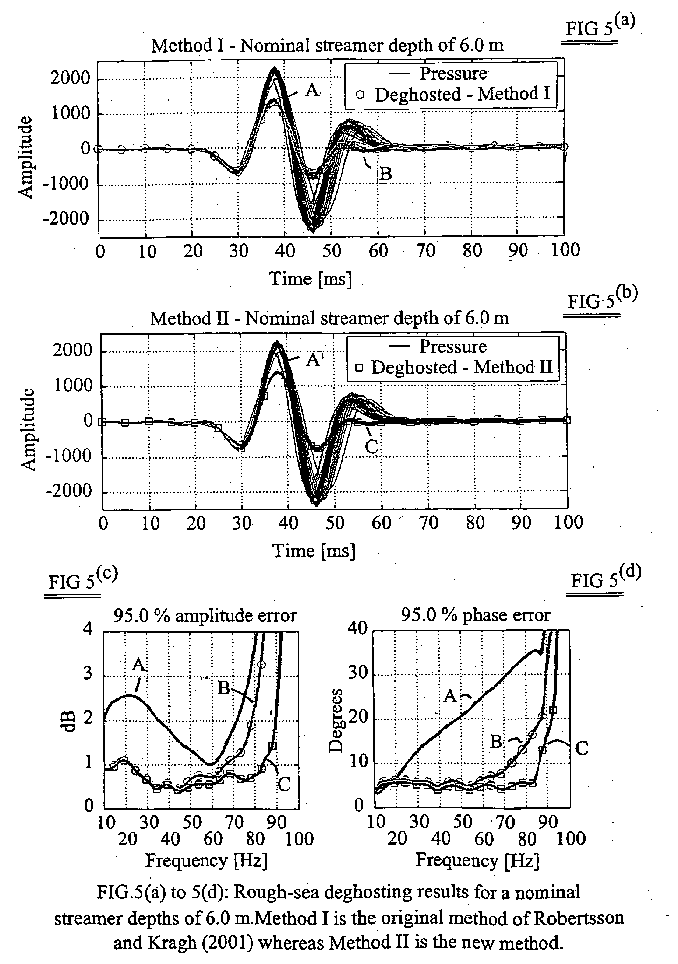

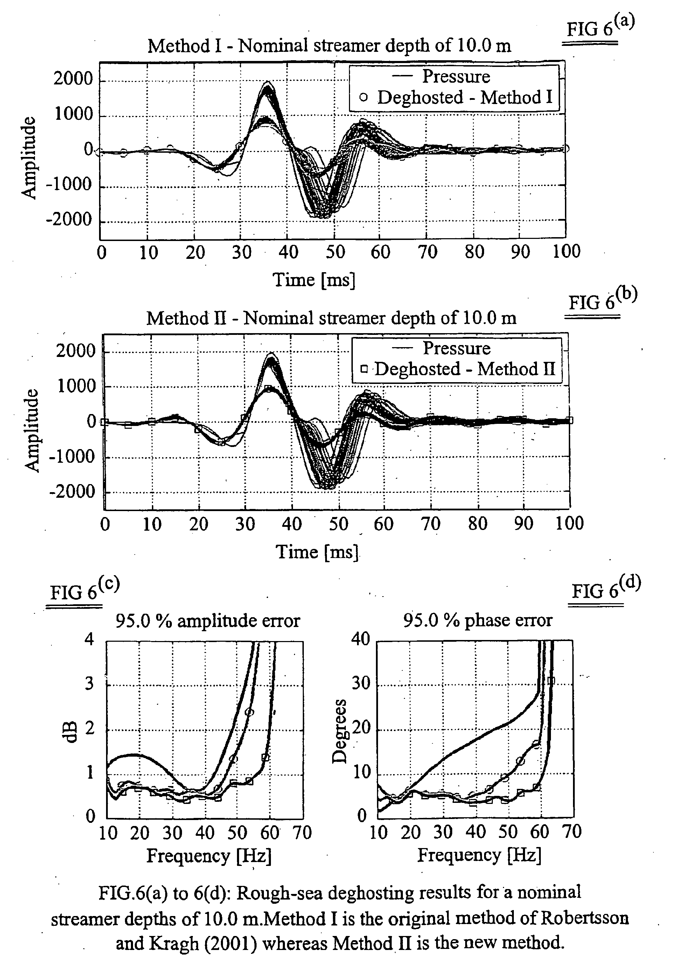

Figures 5(a) to 5(d) and 6(a) to 6(d) illustrates the results provided by the present invention. These results were obtained by modelling synthetic seismic data for a rough-sea surface, and de-ghosting the synthetic seismic data using the method of the present invention. The synthetic seismic data were computed using the rough-sea modelling method developed by R. Laws and E. Kragh (above) and by E. Kragh and R. Laws (above). In summary, rough-sea surfaces are generated, and impulse responses beneath these surfaces are computed. The impulses are made in sets of three, and a total of 40 sets were computed with each set being computed from a different realisation of a 4m significant wave height sea surface. Data were synthesised for a streamer depth of 6.0m (Figures 5(a) to 5(d)) and a streamer depth of 10.0m (Figures 6(a) to 6(d)).

The synthetic seismic data were then de-ghosted using equation (7) above to compute the vertical particle velocity. In the computation using equation (7), the parameters were set as follows: $M = 1$, $N(0) = \infty$ and $N(1) = 2$, so

giving $F_0 = kz \cot(kz)$, $\quad F_1 = -\frac{z^2}{3}\left(1 + \frac{2}{15}k^2 z^2\right)$, and $F_2 = 0$.

A zero-phase Ricker wavelet with a maximum frequency of 50Hz was convolved with the 120 pulses for estimating the $v_z$ component. In the estimation of the $v_z$ component, the well-known length-three central difference operator was used to obtain the second-order horizontal spatial derivative in the x-direction. (The calculation was performed using a 2-D estimation, so that derivatives in the cross-line direction (y-direction) become zero and may be ignored.)

Once the $v_z$ component had been estimated using equation (7), the de-ghosted pressure was determined using equation (1) above. The modelled pressure and the estimated $v_z$ component were down-sampled by a factor of 4 in time before the de-ghosted pressure was determined, thereby increasing the temporal sampling distance from 0.25ms to 1.0ms.

Figure 5(a) shows the raw synthetic seismic data, indicated generally as A, and the results of de-ghosting the synthetic data using the Lax-Wendroff technique of Robertsson and Kragh (above), indicated as B.

Figure 5(b) shows the raw synthetic seismic data, indicated generally as A, and the results of de-ghosting the synthetic data using equation (7) indicated as C. Figure 5(c) shows the 95% confidence interval in spread of the amplitude spectrum, and Figure 5(d) shows the 95% confidence interval in the spread of the phase spectrum. The results are shown for the raw synthetic data, indicated as A, the results of de-ghosting the synthetic data using the prior art Lax-Wendroff technique, indicated as B, and the results of de-ghosting the synthetic data using equation (7) indicated as C. Although the rough-sea perturbations are not completely removed from the de-ghosted data obtained by the present invention, the correction shows a clear improvement below the first ghost-notch frequency (approximately 125Hz). The residual error is of the order of 0.5-1.0dB in amplitude and about 5° in phase, and these errors are significantly lower than the errors currently obtained in de-ghosting real seismic data.

Figures 6(a) to 6(d) correspond generally to Figures 5(a) to 5(d) respectively, except that they relate to a streamer depth of 10.0m. For a streamer at this depth, the first ghost notch frequency is approximately 75Hz.

A zero-phase band pass filter with cut off frequencies of 10-15-90-100Hz was applied to the wavelets shown in Figure 2, whereas a zero-phase band pass filter with cut-off frequencies 10-15-65-70 was applied to the wavelets shown in Figure 6(a) to 6(d). This has a similar effect to the bandlimited differentiation mentioned above and also below in connection with equations (A14) and (A15). Here the filter is applied to the data directly in a pre-processing step, and this has a similar overall effect.

The de-ghosted seismic data obtained by a method of the present invention may be subjected to further processing. For example, the de-ghosted data may be used to estimate the signature of the seismic source 1. This can be done, for example, according to the method proposed by L. Amundsen et al in Geophysics Vol 60, pp212-222 (1995).

Alternatively, the de-ghosted data may be further processed to remove or at least attenuate events in the data arising from paths that involve reflection and/or scattering at the free-surface of the water column. Such events are generally known as free-surface related multiples, since they arise from paths that make multiple passes through the water column. In one embodiment, the principal steps required to remove free-surface related multiples are as follows.

Initially the direct arrival and the ghost arrival associated with the direct arrival in the incident pressure wavefield acquired at the streamer are isolated and removed from the pressure wavefield. This may be done in any suitable way, for example, by "mute" in which the direct arrival and its associated ghost arrival is simply separated from the other arrivals. Provided that the source-receiver offset is not too great and the water depth is not too shallow, the direct arrival in the seismic data, and its associated ghost arrival, are generally well separated from other arrivals.

The vertical component of the particle velocity is then estimated, according to a method as described above. The vertical component of the particle velocity is then used to separate the remaining incident pressure wavefield (i.e., the pressure wavefield remaining after the direct arrival and its associated ghost have been removed) into its up-going and downgoing components, for example using equation (1) above to determine the up-going component of the pressure wavefield.

Once the downgoing component of the remaining part of the pressure wavefield has been found, it is added to the original direct arrival and its associated ghost arrival. This gives the overall downgoing wavefield. (In a typical survey the source will be nearer the sea surface than the receiver, so that the direct arrival and its associated ghost contain only down-going energy.) Effects arising from free-surface multiple reflections may then be removed using the "U divided by D" method proposed by L. Amundsen in "Elimination of free-surface related multiples without need of the source wavelet", Geophysics, Vol. 66, pp327-341 (2001). In this method, "U divided by D" refers to the up-going component of the wavefield remaining after removal of the direct arrival and its associated ghost arrival, divided by the overall down-going component of the wavefield. This division is essentially a deconvolution step.

The embodiments of the invention described above may be carried out on seismic data acquired by one or more pressure sensors disposed within a water column, for example on pressure data acquired by a streamer. Alternative embodiments of the invention will now be described in which the seismic data include both pressure data and particle velocity data. Such data may be acquired by, a seismic receiver, for example a streamer, that has both pressure sensors and particle velocity sensors. A streamer provided with both pressure sensors and particle velocity sensors can directly measure both the fluid pressure $p$ and the particle velocity $v$.

The quantities $p$ and $v$ are not independent from one another, but are related by the following equations:

$$\dot{p} = -K\nabla.v \qquad\qquad (11)$$

$$v = -\frac{1}{\rho}\nabla p \qquad\qquad (12)$$

In equation (11), $\dot{p}$ denotes the time-derivative of $p$, and $K$ denotes the bulk modulus of the water column.

In one embodiment of the invention, it is assumed that the depth of the streamer is known. The depth may be known if, for example, the streamer is provided with depth sensors. If the streamer depth is known, it is then possible to compare the output from the particle velocity sensors with the output from the fluid pressure sensors. This comparison can be made, for example, by calculating the particle velocity from the measured values for pressure and from the depth of the streamer according to equation (2) or an equation derived therefrom, and comparing the calculated value of the particle velocity with directly measured values for the particle velocity. These values should, of course, be the same if the particle velocity and the fluid pressure have been measured accurately. This embodiment can be considered as calibrating the pressure sensors relative to the particle velocity sensors, and allows the accuracy of the sensors to be monitored.

This process for monitoring the accuracy of the sensors can be carried out while acquired seismic data is being processed by a method of the present invention. Alternatively, it can be carried out on its own, for example to check the sensors at the start of a seismic survey. This allows the extra degree of freedom provided by measuring both $p$ and $v$ to be used to calibrate the sensors.

In this embodiment, the depth of the streamer can be estimated, for example from knowledge of the arrangement for suspending the streamer from floats. For improved accuracy, however, it is preferable that the depth of the receiver is measured directly.

The invention may also be used to determine the depth of the receiver. To do this the vertical component of the particle velocity is determined using a method as described above. The depth of the receiver may be estimated from the measured value for the vertical component of the particle velocity and the estimated value for the vertical component of the particle velocity.

In an alternative embodiment of the invention, the vertical component of particle velocity from the pressure acquired at the receiver is determined using the following equation or an equation derived therefrom:

$$v_z(\omega, x, z) \approx F_k * p(\omega, x, z), \tag{13}$$

where

$$\widetilde{F}_k = \min_{b_m, a_n} \sum_{k=-(K-1)}^{K-1} W_k \left| \frac{\Theta_{km} b_m}{\Phi_{kn} a_n} - F_k \right|^2 \tag{14}$$

In equation (14), $a_n$ and $b_m$ denote the backward and forward filter coefficients, $W_k$ are a set of positive weights, and $F_k = F(k\Delta k_x)$ denote the desired discrete horizontal wavenumber response. The derivation of equation (14) is explained in the Appendix below.

As noted above, equation (14) is an approximation of equations (A34) and (A36) given in the appendix below. Solutions to equation (14) exist for any depths. Equation (14) may be applied to data obtained with a rough sea surface, which is not possible for equations (A34) and (A36) (although they are exact for the case of a flat sea surface). As explained in the Appendix, equation (14) may be implemented to give the following zero-phase non-recursive filter:

$$\widetilde{F}_k = \min_{g_m} \sum_{k=0}^{\kappa-1} W_k \left| \Gamma_{km} g_m - F_k \right|^2 \tag{15}$$

where $\Gamma_{km} = \cos(k\Delta k_x m\Delta x)$, $b_m = 0.5g_m$ for $g_m = 1,2,...,M/2$ and $b_0 = g_0$.

Vertical particle velocities obtained using equations (13) and (14) or using equations (13) and (15) may be used in any of the applications described herein.

Equations (13), (14) and (15) are 1-D equations, but the corresponding 2-D equations may also be used. For the 2-D case, the $F_k$ are a function of both $k_x$ and $k_y$.

The embodiments of the present invention described above have related to the de-ghosting the signal recorded at the receiver. The invention can, however, also be used for source-side de-ghosting. In principle this could be done by directly measuring the fluid pressure at the source, but in practice it is possible to make use of the principle of reciprocity to avoid the need to do this.

The principle of reciprocity is a fundamental principle of wave propagation, and states that a signal is unaffected by interchanging the location and character of the sources and receivers. For example, if a surveying arrangement with a seismic source at point A and a receiver array at point B gives a certain signal at the receiver array, then using a single receiver at point A and a source array at point B would lead to the same signal, provided that the source array corresponds to the receiver array. (By "corresponds", it is meant that the source array contains the same number of sources as the receiver array has receivers, and that the sources in the source array are arranged in the same positions relative to one another as the receivers in the receiver array).

In consequence of the principle of reciprocity, the signal emitted by an array of seismic sources can be de-ghosted by making measurements using a receiver array, whether the seismic sources are actuated simultaneously or consecutively. The recorded signal is analogous to that recorded in a reciprocal arrangement where the source and receiver locations are interchanged. The method outlined hereinabove can therefore also be applied to the source array that it is desired to de-ghost. The signal produced at the receiver array by an array of a plurality of seismic sources is measured, and a de-ghosting filter is derived from this measured signal. By the principle of reciprocity, this filter can be used to de-ghost the signal emitted by the source array.

The methods described in this application are fast, and it is possible to use process a complete trace using a method of the invention. If desired, however, the methods may be applied to a selected part of a trace.

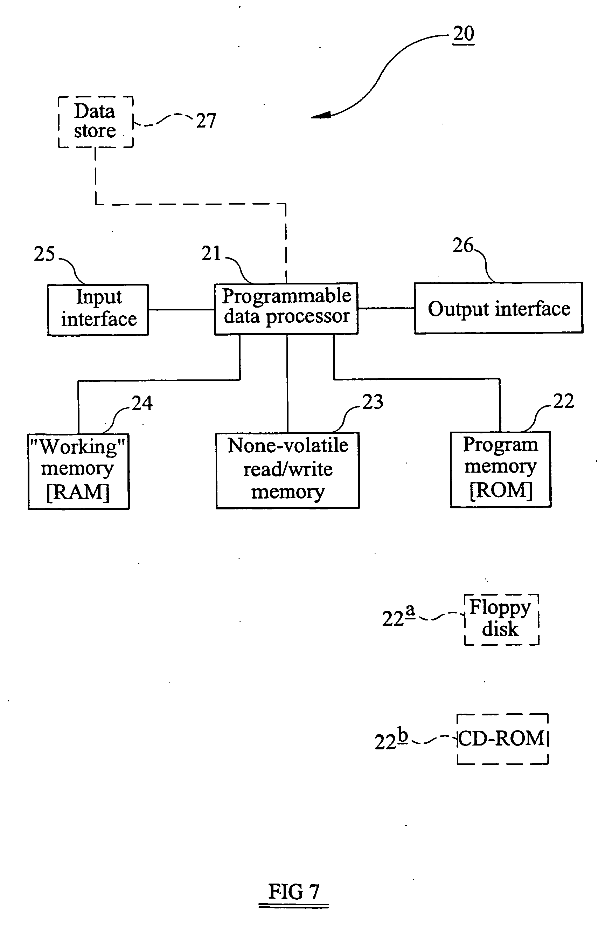

Figure 7 is a schematic block diagram of an apparatus 20 that is able to perform a method according to the present invention.

The apparatus 20 comprises a programmable data processor 21 with a program memory 22, for instance in the form of a read only memory (ROM), storing a program for controlling the data processor 21 to process seismic data by a method of the invention. The apparatus further comprises non-volatile read/write memory 23 for storing, for example, any data which must be retained in the absence of a power supply. A "working" or "scratch pad" memory for the data processor is provided by a random access memory RAM 24. An input device 25 is provided, for instance for receiving user commands and data. One or more output devices 26 are provided, for instance, for displaying information relating to the progress and result of the processing. The output device(s) may be, for example, a printer, a visual display unit, or an output memory.

The seismic model, the parameters of a seismic surveying arrangement and the prior AVO information may be supplied via the input device 25 or may optionally be provided by a machine-readable data store 27.

The results of the processing may be output via the output device 26 or may be stored.

The program for operating the system and for performing the method described hereinbefore is stored in the program memory 22, which may be embodied as a semiconductor memory, for instance of the well known ROM type. However, the program may well be stored in any other suitable storage medium, such as a magnetic data carrier 22a (such as a "floppy disk") or a CD-ROM.

**Appendix**

Robertsson and Kragh (above) have shown that the vertical component of the particle velocity, $v_z$, can be estimated from the raw measurements of the pressure field, $p$. In the typical seismic frequency band one possible approximation given is

$$v_z(\omega, x, y, z) = -\frac{i}{\rho \omega z}\left[A'_{00} + A'_{10}(kz)^2 + A'_{11}z^2\left(\frac{\partial^2}{\partial x^2} + \frac{\partial^2}{\partial y^2}\right)\right]p(\omega, x, y, z), \qquad (A1)$$

with scalars

$$A'_{00} = 1 \quad ; \quad A'_{10} = -1/2 \quad ; \quad A'_{11} = -1/2, \qquad (A2)$$

In equation (A1) $\omega$ is the (angular) frequency, $k = \omega/\alpha$ is the wavenumber, $\alpha$ is the P-wave velocity, $\rho$ is the density, and $z = z(x, y)$ is the streamer depth. According to Robertsson and Kragh, approximation requires that the streamer is towed no deeper than approximately $\lambda/3.5$, where $\lambda$ is the minimum wavelength, and that the receiver spatial sampling interval is around 3m or less. This method is fundamentally limited to frequencies below the first ghost notch. For instance, for a streamer depth of 6 m, equation (A1) is accurate up to approximately 70 Hz.

For densely sampled pressure measurements one attractive feature of method (A1) is that the filters for estimating the vertical particle velocity are local and short. By approximating the second-order horizontal spatial derivatives by three-point central difference-operators, the spatial filter has cross structure with five coefficients. Processing single streamer pressure data such as those provided by the new Q-Marine streamers under the 2.5D earth model, the filter has three coefficients only. Thus, to estimate the vertical particle velocity at a particular receiver location, only the pressure field at this and the two neighbouring receivers are required. Provided the depth of the (near-horizontal) streamers below the sea surface are known at all points along the streamers, equation (A1) gives a methodology of estimating the vertical particle velocity field in rough-sea environments. Let $P$ and $V_z$ denote the spatial Fourier transforms of $p$ and $v_z$, respectively. The estimate given in equation (A1) then can be combined with the raw pressure measurements to deghost the data (see e.g. L. Amundsen in Geophysics Vol. 56, pp1027-1039 (1993) or UK patent application No. 9906456.0)

$$\tilde{P}(\omega, k_x, k_y, z) = \frac{1}{2}\left[P(\omega, k_x, k_y, z) - \frac{\rho \omega}{k_z}V_z(\omega, k_x, k_y, z)\right], \qquad (A3)$$

where $\tilde{P}(\omega, k_x, k_y, z)$ denotes the deghosted (up-going) pressure, $k_z = \sqrt{k^2 - \kappa^2}$ is the vertical wavenumber, $\kappa^2 = k_x^2 + k_y^2$, and $k_x$ and $k_y$ are the horizontal wavenumbers. Equation (3) is valid for all wavenumbers. Alternatively, approximations to equation (A3) as those suggested by A.Osen et al. in "Towards optimal spatial filters for demultiple and wavefield splitting of ocean bottom seismic data", submitted to Geophysics (2002).

In the present application the accuracy of the vertical particle velocity field approximation given in equation (A1) is extended by introducing optimised filters. L.Amundsen et al. derived, in Geophysics Vol. 60, pp212-222 (1995) an exact frequency-wavenumber domain relationship between the vertical component of the particle velocity and the pressure field. For single streamer data the relationship is:

$$V_z(\omega, k_x, k_y, z) = -\frac{k_z}{\rho\omega}\left(\frac{\exp(-ik_z z) + \exp(ik_z z)}{\exp(-ik_z z) - \exp(ik_z z)}\right) \cdot P(\omega, k_x, k_y, z) \tag{A4}$$

Equation (A4) is valid for all streamer depths $z$ in the water column when the receiver cable is horizontal and the air/water surface is flat with vanishing pressure. Essentially, the equation shows that to find the vertical component of the particle velocity from the pressure field, first the pressure has to be receiver-deghosted, then the receiver ghost operator for the vertical component of the particle velocity is applied. (Taking into account that the reflection coefficient of the free surface is -1, the ghost operator for the pressure is 1-exp($2ik_z z$) since the pressure is the sum of up going and downgoing waves, whereas the ghost operator for the vertical particle velocity is 1 + exp($2ik_z z$) since the vertical particle velocity is proportional to the difference between upgoing and downgoing waves.) Note that when the source depth is less than the receiver depth the incident pressure wavefield (the sum of the direct pressure wavefield and its ghost) does not contain a receiver ghost, but only a source ghost. Since equation (A4) relies on receiver deghosting, it cannot correctly treat the incident wavefield. This is of minor importance in receiver deghosting of streamer data. When the source depth is greater than the receiver depth, however, the incident pressure wavefield contains a receiver ghost as do the reflected part of the pressure field. In this case, equation (A4) is valid for the full pressure wavefield.

Equation (A4) can be rewritten as

$$V_z(\omega, k_x, k_y, z) = -\frac{i}{\rho\omega z}\sum_{m=0}^{\infty}(-1)^m F_m(k, z)k^{2m} \cdot P(\omega, k_x, k_y, z), \tag{A5}$$

with horizontal wavenumber ($\kappa$) independent functions

$$F_m = F_m(k, z) = k^{-2m}\sum_{n=m}^{\infty} A_{nm}(kz)^{2n} \tag{A6}$$

where

$$A_{nm} = \frac{(-1)^n 2^{2n} B_{2n}}{(2n)}\binom{n}{m} \tag{A7}$$

are scalars, $B_n$ is the n:th Bernoulli number, and $n!$ is the factorial of $n$. All functions $F_m$ can be given in compact form. For instance,

$$F_0 = kz\cot(kz) = -ikz\left(\frac{\exp(-ikz) + \exp(ikz)}{\exp(-ikz) - \exp(ikz)}\right) \tag{A8}$$

$$F_1 = \frac{z}{2k}\frac{\partial}{\partial(kz)}F_0, \tag{A9}$$

$$F_2 = \frac{z}{4k^3}\left(\frac{\partial}{\partial(kz)}kz - 2\right)\frac{\partial}{\partial(kz)}F_0. \tag{A10}$$

The function $F_0$ ensures that vertically propagating waves ($k_x = k_y = 0$) are correctly deghosted.

Taking an inverse Fourier transform of equation (A5) over horizontal wavenumbers gives

$$v_z(\omega, x, y, z) = -\frac{i}{\rho\omega z}\sum_{m=0}^{\infty}F_m(k, z)D_2^m(x, y)*p(\omega, x, y, z), \tag{A11}$$

where $D_2$ is the inverse Fourier transform of $\kappa^2$, and * is the 2D spatial convolution operator. For infinite bandwidth,

$$D_2(x, y) = D_2(x) + D_2(y), \tag{A12}$$

where

$$D_2(x) = \frac{\partial^2}{\partial x^2} \quad ; \quad D_2(y) = \frac{\partial^2}{\partial y^2}, \tag{A13}$$

are second-order spatial differentiation operators. Differentiation however involves large amplification of high wavenumbers. Hence, in practical situations a bandlimited version of differentiation is preferably used. Let $d_2$ denote a bandlimited version of $D_2$. Two possible bandlimited differentiation operators are

$$d_2(x) = \frac{1}{\Delta x}[\delta(x + \Delta x) - 2\delta(x) + \delta(x - \Delta x)], \tag{A14}$$

where $\Delta x$ is the spatial sampling interval, or

$$d_2(x, \omega) = \frac{1}{\pi}\int_0^K dk_x \cos(k_x x)W(\omega, k_x)(-k_x^2), \tag{A15}$$

where $W$ is a weighting function that properly bandlimits the differentiation operator. Note that $W$ can be changed per frequency component. In equation (A15) $K$ is the maximum wavenumber. Two possible choices are $K = \omega / c$, where $c$ is the velocity of water, or $K = \pi / \Delta x$, the Nyquist wavenumber.

Note that equation (A11) is valid for all receiver depths $z$ in the water column. Also, observe that the scheme is iterative:

$$D_2^m * p = D_2^m * \left( D_2^{m-1} * p \right) \quad ; \quad D_2^0 = 1. \tag{A16}$$

This recursive property allows equation (A11) to be implemented with numerical efficiency. For dense spatial sampling the differentiators $D_2(x)$ and $D_2(y)$ can be approximated by filters of length three [see equation (A14)]. A properly designed, bandlimited, second-order differentiator $d_2(x)$ is imperative for obtaining a stable iterative scheme.

**Special case I: Finite m**

A special case of equation (A11) arises when $m$ is finite, say $M$. Then, for infinite bandwidth,

$$v_z(\omega, x, y, z) \approx -\frac{i}{\rho \omega z} \sum_{m=0}^{M} F_m(k, z) \left( \frac{\partial^2}{\partial x^2} + \frac{\partial^2}{\partial y^2} \right)^m p(\omega, x, y, z), \tag{A17}$$

where $F_m$ is given in equation (A6) as an infinite series. However, the function $F_m$ can also be given analytically in terms of trigonometric functions. Examples are $F_0$, $F_1$, and $F_2$ given in equations (A8), A(9), and (A10), respectively. Observe that the assumption of flat sea surface used to derive equation (4) can now be relaxed. In equation (A17) the x and $y$ variables are decoupled from $z$, implying that it is valid also for a rough sea surface.

Equation (A17) can be numerically implemented in different ways. The preferred implementation depends on the spatial sampling interval for the pressure field. For densely sampled data one would typically represent the spatial derivatives by classical central finite-difference approximations. If $M$ is small, the filter is then local and compact. As an example, choosing $M = 2$ gives for infinite bandwidth,

$$v_z(\omega, x, y, z) \approx -\frac{i}{\rho \omega z} \left[ F_0 + F_1 \left( \frac{\partial^2}{\partial x^2} + \frac{\partial^2}{\partial y^2} \right) + F_2 \left( \frac{\partial^2}{\partial x^2} + \frac{\partial^2}{\partial y^2} \right)^2 \right] p(\omega, x, y, z). \tag{A18}$$

Approximating the second-order spatial derivatives by a three-point finite difference operator the iterative filter is of length three. Since the functions $F_0$, $F_1$ and $F_2$ are valid for all receiver depths, equation (A18) is more general than equation (A1), and is preferred for rough-sea deghosting.

For a coarser receiver interval the horizontal derivatives are most conveniently implemented as numerically optimised difference operators or by use of Fourier techniques.

**Special case II: Finite *m, n***

Limiting the sums over $m$ in equation (11) and $n$ in equation (A6) from infinity to $M$ and $N(m)$, respectively, gives for infinite bandwidth the approximation

$$v_z(\omega, x, y, z) \approx -\frac{i}{\rho \omega z} \sum_{m=0}^{M} F_m(k, z) \left( \frac{\partial^2}{\partial x^2} + \frac{\partial^2}{\partial y^2} \right)^m p(\omega, x, y, z), \tag{A19}$$

with

$$F_m \approx k^{-2m} \sum_{n=m}^{N(m)} A_{nm} (kz)^{2n} \tag{A20}$$

Choosing $M = 1$, $N(0) = 2$, and $N(1) = 1$, gives

$$F_0 \approx 1 - \frac{(kz)^2}{3}, \qquad (A21)$$

$$F_1 \approx -\frac{z^2}{3} \qquad (A22)$$

and

$$v_z(\omega, x, y, z) \approx -\frac{i}{\rho \omega z}\left[A_{00} + A_{10}(kz)^2 + A_{11}z^2\left(\frac{\partial^2}{\partial x^2} + \frac{\partial^2}{\partial y^2}\right)\right]p(\omega, x, y, z), \qquad (A23)$$

with scalars

$$A_{00} = 1 \quad ; \quad A_{10} = -1/3 \quad ; \quad A_{11} = -1/3. \qquad (24)$$

Equation (A23) has the same structure as equation (A1) proposed by Robertsson and Kragh (above). The scalars $A_{10}$ and $A_{11}$, however, differ from the scalars $A'_{10}$ and $A'_{11}$ in equation (A1). In many respects the limitations of equation (A23) are similar to those of the formula of Robertsson and Kragh (above). However, equations (A1), (A17), and (A19) are general and one significant difference is that they are valid for all streamer depths, whereas the theory derived by Robertsson and Kragh (above) requires that the streamer is towed no deeper than approximately $\lambda / 3.5$, where $\lambda$, is the minimum wavelength.

If we choose $M = 1$, $N(0) = \infty$ and $N(1) = 2$, this results in $F_0 = kz \cot(kz)$ and $F_1 = -\frac{z^2}{3}\left(1 + \frac{2}{15}k^2z^2\right)$.

**Data processing of single streamer data**

Equations (A11), (A17) and (A19) above include derivatives in the $y$-direction or cross-line direction (the streamer(s) is/are assumed to extend along the $x$-direction). In a seismic surveying arrangement that includes only a single streamer it is not clear how the cross-line derivatives in the $y$-direction that occur in the above equations may be determined from the seismic data acquired by the receivers on the streamer. It will be noted, however, that only even powers (second-order, fourth-order, sixth-order, etc.) spatial derivatives occur. Finding an expression for the second-order spatial derivative is therefore sufficient.

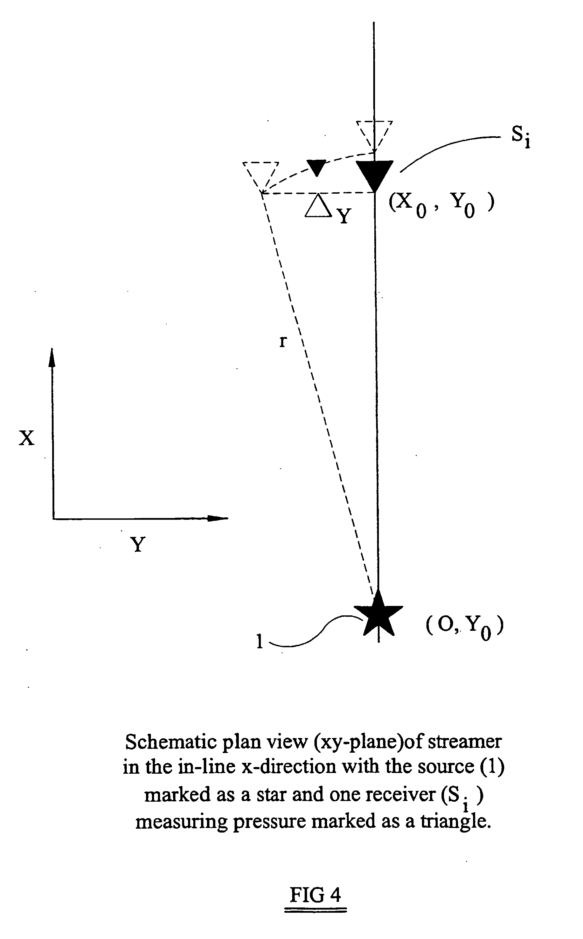

Consider the single streamer geometry shown in Figure 4, which is a schematic plan view of the seismic surveying arrangement of Figure 1. The seismic source 1 is located at coordinates $(0, y_0)$ in the $x$-$y$ plane. The streamer extends along the $x$-axis, and has a $y$-coordinate $y_0$. One of the receivers $S_i$ is located at coordinates $(x_0, y_0)$, and it assumed that the source 1 and the receiver $S_i$ are located in the same z-plane in an acoustic layer. It will be assume that the model only varies with depth, and does not vary with $x$ or $y$. By using a finite-difference approximation to a second-order derivative, it is possible to write the following equation for the pressure $p$ :

$$\frac{\partial^2}{\partial y^2}p(x_0, y_0) = \frac{1}{\Delta y^2}\left(p(x_0, y_0 + \Delta y) - 2p(x_0, y_0) + p(x_0, y_0 - \Delta y)\right) + O(\Delta y^2), \qquad (A25)$$

where $O(\Delta y^2)$ expresses the leading error term in the finite-difference approximation. However, because of radial symmetry the recorded pressure is the same on either side of the receiver so that equation (A25) becomes

$$\frac{\partial^2}{\partial y^2}\,p(x_0,y_0)=\frac{2}{\Delta y^2}\left(p(x_0,y_0+\Delta y)-p(x_0,y_0)\right)+O(\Delta y^2). \qquad (A26)$$

Radial symmetry also yields

$$p(x_0,y_0+\Delta y)=p\!\left(x_0\sqrt{1+(\Delta y/x_0)^2},\,y_0\right), \qquad (A27)$$

so that equation (A26) becomes:

$$\frac{\partial^2}{\partial y^2}\,p(x_0,y_0)=\frac{2}{\Delta y^2}\left(p\!\left(x_0\sqrt{1+(\Delta y/x_0)^2},\,y_0\right)-p(x_0,y_0)\right)+O(\Delta y^2) \qquad (A28)$$

By using a first-order one-sided finite-difference approximation in the x-direction it is possible to write equation (A28) as:

$$\frac{\partial^2}{\partial y^2}\,p(x_0,y_0)=\frac{2x_0\left(\sqrt{1+(\Delta y/x_0)^2}-1\right)}{\Delta y^2}\left(\frac{\partial}{\partial x}\,p(x_0,y_0)+O\!\left(\sqrt{1+(\Delta y/x_0)^2}-1\right)\right)+O(\Delta y^2)$$

$$(A29)$$

Taking a Taylor series expansion of the square root:

$$\sqrt{1+(\Delta y/x_0)^2}=1+\frac{1}{2}(\Delta y/x_0)^2+O(\Delta y^4), \qquad (A30)$$

equation (A29) may be re-written as ,

$$\frac{\partial^2}{\partial y^2}\,p(x_0,y_0)=\frac{2x_0\left(\frac{1}{2}(\Delta y/x_0)^2+O(\Delta y^4)\right)}{\Delta y^2}\left(\frac{\partial}{\partial x}\,p(x_0,y_0)+O(\Delta y^2)\right)+O(\Delta y^2). \qquad (A31)$$

Further simplification of equation (31) yields

$$\frac{\partial^2}{\partial y^2}\,p(x_0,y_0)=\frac{1}{x_0}\frac{\partial}{\partial x}\,p(x_0,y_0)+O(\Delta y^2). \qquad (A32)$$

Finally, we let $\Delta y \to 0$ so that:

$$\frac{\partial^2}{\partial y^2} p(x_0, y_0) = \frac{1}{x_0} \frac{\partial}{\partial x} p(x_0, y_0). \tag{A33}$$

For pressure data over a horizontally layered medium there is no problem with the singularity in equation (33) since $\dfrac{\partial}{\partial x} p(x_0, y_0)$ goes to zero faster than the singularity $1/x_0$ goes to infinity.

Equation (A33) is consistent with what is valid for cylindrical symmetry (data over a horizontally layered medium). An alternative approach would therefore be to multiply the data with $\sqrt{t}$, where t is time, and use the 2D version of the theory derived in this application as well as in UK patent application No. 0015810.5. However, equation (A33) can potentially give more accurate results.

It should be noted the above approach may not be reliable for a medium that is not simply plane layered since there can be a problem because $p$ is not symmetric with respect to $x$.

**Complex frequency**

In the implementation of the filters we use complex frequencies to avoid the singularities in the functions $F_m$ as given e.g. in equations (8), (9), and (10) for $M = 0,1,2$, respectively. The use of a complex-frequency is described by, for example, S.Mallick and L.N.Frazer in Geophysics Vol. 52, pp1355-1364 (1987) and by L.Amundsen and B. Ursin in Geophysics Vol. 56, pp1027-1039 (1991).

**On $V_z$-estimation using numerically optimised spatial filters**

**1. Introduction**

In this section, we introduce numerically optimised spatial filters for the estimation of the vertical particle velocity field. Amundsen et al. (1995, above) derived an exact frequency-wavenumber domain relationship between the vertical component of the particle velocity and the pressure field. For single streamer data the relationship in the 2D case is

$$v_z(\omega, k_x, z) = -\frac{k_z}{\rho\omega} \left[ \frac{\exp(-ik_z z) + \exp(ik_z z)}{\exp(-ik_z z) - \exp(ik_z z)} \right] \cdot p(\omega, k_x, z) \tag{A34}$$

Equation (A34) may be re-written as:

$$v_z(\omega, k_x, z) = F(\omega, k_x, z) \cdot p(\omega, k_x, z) \tag{A35}$$

where the $v_z$-estimation filter is given by:

$$F(\omega, k_x, z) = -\frac{k_z}{\rho\omega} \left[ \frac{\exp(-ik_z z) + \exp(ik_z z)}{\exp(-ik_z z) - \exp(ik_z z)} \right] \tag{A36}$$

In the frequency-space domain, equation (A34) is written symbolically as

$$V_z = \widetilde{F} * p \qquad (A37)$$

where * denotes spatial convolution.

2. Optimisation problem formulation

The discrete horizontal wavenumber response of a spatial digital filter can be written as:

$$\widetilde{F}_k = \widetilde{F}(k\Delta k_x) = \frac{\sum_{m=-M/2}^{M/2} b_m \exp(-ik\Delta k_x m\Delta x)}{\sum_{n=0}^{N} a_n \exp(-ik\Delta k_x n\Delta x)} = \frac{\Theta_{km} b_m}{\Phi_{kn} a_n} \qquad (A38)$$

where $a_n$, $b_m$ are the backward and forward filter coefficients with $N,M$ the respective filter orders. Without loss of generality, M and N are assumed to be even numbers and $a_0 \equiv 1$. Furthermore, $\Delta x$ is the spatial sampling interval and $\Delta k_x = \pi/[\Delta x(K-1)]$ is the distance between the discrete horizontal wavenumbers. If $F_k = F(k\Delta k_x)$ denotes the desired discrete horizontal wavenumber response, then the design of the spatial filters can be stated as a general weighted non-linear least-squares optimisation problem:

$$\widetilde{F}_k = \min_{b_m, a_n} \sum_{k=-(K-1)}^{K-1} W_k \left| \frac{\Theta_{km} b_m}{\Phi_{kn} a_n} - F_k \right|^2 \qquad (A39)$$

where $W_k$ is a set of positive weights. In the following, the optimisation problem is formulated for propagating waves only, for which the ideal decomposition filter is purely real (i.e., zero-phase). Let $\kappa$ denote the index corresponding to a discrete horizontal wavenumber close to the critical wavenumber.

### 3. Zero-phase FIR filters

For a zero-phase non-recursive or finite impulse response (FIR) filter, the forward filter coefficients are symmetric and the backward filter order is zero. This reduces the non-linear least-squares optimisation problem given in equation (A39) to the following linear-least squares optimisation problem:

$$\min_{g_m} \sum_{k=0}^{\kappa-1} W_k \left| \Gamma_{km} g_m - F_k \right|^2 \qquad (A40)$$

where $\Gamma_{km} = \cos(k\Delta k_x m\Delta x)$. The $g_m$'s are related to the $b_m$'s by $b_m = 0.5 g_m$ for $g_m = 1,2,...,M/2$ and by $b_0 = g_0$.

### 4. Quadratic Programming

The linear least-squares optimisation problem shown in equation (A40) is unconstrained, and unique and optimal solutions are given by the pseudo-inverses. Nevertheless, it can be important that the magnitude responses of the optimal FIR filter have zero-error at particular horizontal wavenumbers, or that they have magnitude responses smaller than a given function for a certain horizontal wavenumber range. The combination of a linear least-squares optimisation problem with linear equality and/or inequality constraints is called Quadratic Programming (QP) and can be solved efficiently with many different algorithms.

For example, a single equality constraint can be included at zero horizontal wavenumber to ensure that propagating waves are estimated correctly by the optimal FIR filter. In addition, linear inequality constraints can be included in the evanescent horizontal wavenumber range to force the spatial filter's magnitude response of the ideal decomposition filter. This prevents boosting of evanescent waves by the numerically optimised spatial filters.

**Claims**

1. A method of determining a vertical component of particle velocity from seismic data acquired at a receiver disposed within a water column, the method comprising:

   applying an operator to the seismic data to determine the vertical component of particle velocity of the seismic data, wherein the seismic data is acquired at a depth beneath the surface of the water column of at least 0.4 times the minimum wavelength of seismic energy emitted by the seismic source used to acquire the seismic data, wherein the operator utilizes a spatial filter configured for processing seismic data based on the depth of the receiver.

2. A method of determining a vertical component of particle velocity as claimed in claim 1 and comprising determining the vertical component of particle velocity from the pressure acquired at the receiver using the following equation or an equation derived therefrom:

$$v_z(\omega, x, y, z) = -\frac{i}{\rho \omega z} \sum_m F_m(k, z) D_2^m(x, y) * p(\omega, x, y, z),$$

where $v_z$ is the vertical component of the particle velocity, $p$ is the acquired pressure wavefield, $\omega$ is the angular frequency, $k(= \omega/\alpha)$ is the wavenumber, $\alpha$ is the P-wave velocity, $\rho$ is the density, $D_2$ is a differential operator,

$$F_m = F_m(k, z) = k^{-2m} \sum_{n=m}^{\infty} A_{nm}(kz)^{2n} \quad \text{and } * \text{ is the 2D spatial convolution operator, where}$$

$$A_{nm} = (-1)^{n-1} \frac{2^{2n} - 2}{(2n)!} B_{2n} \binom{n}{m} \quad \text{and } B_n \text{ is the nth Bernoulli number and n! is the factorial of n.}$$

3. A method as claimed in claim 2 wherein the summation over m is carried out for m = 0 to m = M.

4. A method as claimed in claim 3 wherein the step of determining the vertical particle velocity comprises determining the vertical component of particle velocity from the pressure acquired at the receiver according to

$$v_z(\omega, x, y, z) \approx -\frac{i}{\rho \omega z} \left[ F_0 + F_1 \left( \frac{\partial^2}{\partial x^2} + \frac{\partial^2}{\partial y^2} \right) + F_2 \left( \frac{\partial^2}{\partial x^2} + \frac{\partial^2}{\partial y^2} \right)^2 \right] p(\omega, x, y, z),$$

where $v_z$ is the vertical component of the particle velocity, $p$ is the acquired pressure wavefield, $\omega$ is the angular frequency and $\rho$ is the density.

5. A method as claimed in claim 4 wherein the step of determining the vertical particle velocity comprises determining the vertical component of particle velocity from the pressure acquired at the receiver according to:

$$v_z(\omega, x, y, z) \approx -\frac{i}{\rho \omega z} \sum_{m=0}^{M} F_m(k, z) \left( \frac{\partial^2}{\partial x^2} + \frac{\partial^2}{\partial y^2} \right)^m p(\omega, x, y, z),$$

where $F_m \approx k^{-2m} \sum_{n=m}^{N(m)} A_{nm} (kz)^{2n}$ , , $v_z$ is the vertical component of the particle velocity, $p$ is the acquired pressure wavefield, $\omega$ is the angular frequency, $k$ $(= \omega / \alpha)$ is the wavenumber, $\alpha$ is the P-wave velocity, $\rho$ is the density,

$$A_{nm} = (-1)^{n-1} \frac{2^{2n} - 2}{(2n)} B_{2n} \binom{n}{m}$$ and $B_n$ is the nth Bernoulli number and n! is the factorial of n.

6.  A method as claimed in claim 4 wherein the step of determining the vertical particle velocity comprises determining the vertical component of particle velocity from the pressure acquired at the receiver according to:

$$v_z(\omega, x, y, z) \approx -\frac{i}{\rho \omega z} \left[ A_{00} + A_{10} (kz)^2 + A_{11} z^2 \left( \frac{\partial^2}{\partial x^2} + \frac{\partial^2}{\partial y^2} \right) \right] p(\omega, x, y, z),$$

where $A_{00} = 1$, and $A_{10} = A_{11} = -1/3$, where $v_z$ is the vertical component of the particle velocity, $p$ is the acquired pressure wavefield, $k$ $(= \omega / \alpha)$ is the wavenumber, $\alpha$ is the P-wave velocity, $\omega$ is the angular frequency and $\rho$ is the density.

7.  A method as claimed in claim 2 and comprising determining the vertical component of particle velocity from the pressure acquired at the receiver using the following equation or an equation derived therefrom:

$$v_z(\omega, x, y, z) \approx F_k \, p(\omega, x, y, z),$$

where

$$\widetilde{F}_k = \min_{b_m, a_n} \sum_{k=-(K-1)}^{K-1} W_k \left| \frac{\Theta_{km} b_m}{\Phi_{kn} a_n} - F_k \right|^2$$

where $a_n$ and $b_m$ are the backward and forward filter coefficients, $W_k$ are a set of positive weights, and $F_k = F(k\Delta k_x)$ denote the desired discrete horizontal wavenumber response.

8.  A method as claimed in claim 7 and comprising determining the vertical component of particle velocity from the pressure acquired at the receiver using the following equation:

$$\widetilde{F}_k = \min_{g_m} \sum_{k=0}^{K-1} W_k \left| \Gamma_{km} g_m - F_k \right|^2$$

where $\Gamma_{km} = \cos(k\Delta k_x m\Delta x)$, $b_m = 0.5 g_m$ for $g_m = 1, 2, ..., M / 2$ and $b_0 = g_0$.

9.  A method as claimed in any preceding claim wherein the data has been acquired at a receiver disposed on a steamer, the method further comprising the step of determining a derivative of the pressure in a horizontal direction perpendicular to the streamer from a derivative of the pressure in a horizontal direction along the streamer.

10. A method as claimed in claim 9 wherein the step of determining a derivative of the pressure in a horizontal direction perpendicular to the streamer comprises using:

$$\frac{\partial^2}{\partial y^2} p(x_0, y_0) = \frac{1}{x_0} \frac{\partial}{\partial x} p(x_0, y_0)$$

where the streamer extends along the x-axis.

11. A method as claimed in any of claims 1 to 10 and comprising the further step of processing the seismic data using the vertical component of the particle velocity.

12. A method as claimed in claim 11 and comprising processing the seismic data so as to determine at least one of an up-going component and a down-going component of the seismic data.

13. A method as claimed in claim 11 and comprising processing the seismic data using the vertical component of the particle velocity thereby to attenuate effects in the processed data of seismic energy reflected and/or scattered at the free-surface of the water column.

14. A method as claimed in claim 11 and comprising

a) removing the direct arrival and its associated ghost arrival from the acquired seismic data;
b) separating the seismic data remaining after removal of the direct arrival and its associated ghost arrival into its up-going and down-going components;
c) summing the down-going component obtained in step(b) and the direct arrival and its associated ghost arrival thereby to obtain the overall down-going component; and
d) dividing the up-going component obtained in step (b) by the overall down-going component obtained in step (c) thereby to attenuate the effect of multiple reflections in the seismic data.

15. A method as claimed in claim 11 and comprising processing the seismic data using the vertical component of the particle velocity thereby to obtain information about the signature of the source of seismic energy.

16. A method as claimed in any of claims 1 to 10 wherein the seismic data comprises pressure and particle velocity data, and wherein the method further comprises comparing the vertical component of the particle velocity determined from the acquired pressure with the measured values of the particle velocity.

17. A method as claimed in any of claims 1 to 10 wherein the seismic data comprises pressure and particle velocity data, and wherein the method further comprises the step of determining the depth of the seismic receiver within the water column from the measured vertical component of the particle velocity and the vertical component of the particle velocity determined from the pressure.

18. A method as claimed in claim 4, 5 or 6, or in any of claims 9-17 when dependent directly or indirectly from one of claims 4, 5 or 6, and comprising determining at least one horizontal derivative of the pressure wavefield according to a method including the step of Fourier transforming the pressure wavefield to the wavenumber domain.

19. A method of acquiring marine seismic data comprising the steps of:

actuating an array of one or more seismic sources to emit seismic energy;
acquiring seismic data at one or more receivers disposed within a water column, the seismic data including at least pressure data; and
processing the acquired pressure data according to a method as defined in any of claims 1 to 18.

20. An apparatus for determining a vertical component of particle velocity from seismic data acquired at a receiver disposed within a water column, the apparatus comprising:

means for applying an operator to the seismic data to determine the vertical component of particle velocity of the seismic data, wherein the seismic data is acquired at a depth beneath the surface of the water column of at least 0.4 times the minimum wavelength of seismic energy emitted by the seismic source used to acquire the seismic data, wherein the operator utilizes a spatial filter configured for processing seismic data based on the depth of the receiver.

**21.** An apparatus as claimed in claim 20 and comprising means for determining the vertical component of particle velocity from the pressure acquired at the receiver using the following equation or an equation derived therefrom:

$$v_z(\omega, x, y, z) = -\frac{i}{\rho \omega z} \sum_m F_m(k, z) D_2^m(x, y) * p(\omega, x, y, z),$$

where $\omega$ is the angular frequency, $k$ is the wavenumber, $\alpha$ is the P-wave velocity, $\rho$ is the density, $D_2$ is a differential operator, $F_m = F_m(k, z) = k^{-2m} \sum_{n=m}^{\infty} A_{nm}(kz)^{2n}$ and * is the 2D spatial convolution operator.

**22.** An apparatus as claimed in claim 21 and adapted to determine the vertical component of the particle velocity using a bandwidth limited differential operator for $D_2$.

**23.** An apparatus as claimed in claim 21 or 22 and adapted to carry out the summation over m from m = 0 to m = M.

**24.** An apparatus as claimed in claim 23 and adapted to determine the vertical component of particle velocity from the pressure acquired at the receiver according to

$$v_z(\omega, x, y, z) \approx -\frac{i}{\rho \omega z} \left[ F_0 + F_1 \left( \frac{\partial^2}{\partial x^2} + \frac{\partial^2}{\partial y^2} \right) + F_2 \left( \frac{\partial^2}{\partial x^2} + \frac{\partial^2}{\partial y^2} \right)^2 \right] p(\omega, x, y, z).$$

**25.** An apparatus as claimed in claim 23 and adapted to determine the vertical component of particle velocity from the pressure acquired at the receiver according to:

$$v_z(\omega, x, y, z) \approx -\frac{i}{\rho \omega z} \sum_{m=0}^{M} F_m(k, z) \left( \frac{\partial^2}{\partial x^2} + \frac{\partial^2}{\partial y^2} \right)^m p(\omega, x, y, z),$$

where

$$F_m \approx k^{-2m} \sum_{n=m}^{N(m)} A_{nm}(kz)^{2n}.$$

**26.** An apparatus as claimed in claim 23 and adapted to determine the vertical component of particle velocity from the pressure acquired at the receiver according to:

$$v_z(\omega, x, y, z) \approx -\frac{i}{\rho \omega z} \left[ A_{00} + A_{10}(kz)^2 + A_{11} z^2 \left( \frac{\partial^2}{\partial x^2} + \frac{\partial^2}{\partial y^2} \right) \right] p(\omega, x, y, z),$$

where $A_{00} = 1$, and $A_{10} = A_{11} = -1/3$.

**27.** An apparatus as claimed in any of claims 20 to 26 for processing data acquired at a receiver disposed on a steamer and further adapted to determine a derivative of the pressure in a horizontal direction perpendicular to the streamer from a derivative of the pressure in a direction along the streamer.

28. An apparatus as claimed in claim 27 and adapted to determine a derivative of the pressure in the direction perpendicular to the streamer according to:

$$\frac{\partial^2}{\partial y^2}\, p(x_0, y_0) = \frac{1}{x_0}\, \frac{\partial}{\partial x}\, p(x_0, y_0)$$

where the streamer extends along the x-axis.

29. An apparatus as claimed in any of claims 20 to 28 and adapted to further process the seismic data using the vertical component of the particle velocity.

30. An apparatus as claimed in claim 29 and adapted to process the seismic data using the vertical component of the particle velocity thereby to reduce effects in the processed data of seismic energy reflected and/or scattered at the surface of the water column.

31. An apparatus as claimed in claim 29 and adapted to process the seismic data using the vertical component of the particle velocity thereby to obtain information about the signature of the source of seismic energy.

32. An apparatus as claimed in any of claims 20 to 31 and comprising a programmable data processor.

33. A storage medium containing a program that when executed by a data processor, causes the data processor to perform a method as defined in any one of claim 1 to 18.

34. A method of determining a vertical component of particle velocity as claimed in claim 1, wherein the spatial filter is local and compact.

**Patentansprüche**

1. Verfahren zum Bestimmen einer vertikalen Komponente von Partikelgeschwindigkeit aus seismischen Daten, die an einem Empfänger erfasst werden, der innerhalb einer Wassersäule angeordnet ist, wobei das Verfahren umfasst:

Anwenden eines Operators auf die seismischen Daten, um die vertikale Komponente von Partikelgeschwindigkeit der seismischen Daten zu bestimmen, worin die seismischen Daten in einer Tiefe unter der Oberfläche der Wassersäule von mindestens dem 0,4-fachen der minimalen Wellenlänge von seismischer Energie erfasst werden, die von der zum Erfassen der seismischen Daten verwendeten seismischen Quelle emittiert wird, worin der Operator ein Raumfilter nutzt, das zum Verarbeiten von seismischen Daten auf der Basis der Tiefe des Empfängers konfiguriert ist.

2. Verfahren zum Bestimmen einer vertikalen Komponente von Partikelgeschwindigkeit nach Anspruch 1 und das Bestimmen der vertikalen Komponente von Partikelgeschwindigkeit aus dem Druck umfassend, der am Empfänger unter Verwendung der folgenden Gleichung oder einer davon abgeleiteten Gleichung erfasst wird:

$$v_z(\omega, x, y, z) = -\frac{i}{\rho \omega z} \sum_m F_m(k, z) D_2^m(x, y) * p(\omega, x, y, z),$$

wo $v_z$ die vertikale Komponente der Partikelgeschwindigkeit ist, $p$ das erfasste Druckwellenfeld ist, $\omega$ die Kreisfrequenz ist, $k\ (= \omega/\alpha)$ die Wellenzahl ist, $\alpha$ die P-Wellengeschwindigkeit ist, $\rho$ die Dichte ist, $D_2$ ein Differentialoperator ist, $F_m = F_m(k, z) = k^{-2m} \sum_{n=m}^{\infty} A_{nm}\, (kz)^{2n}$ und * der 2D-Raum-Faltungsoperator ist, wo

$A_{nm} = (-1)^{n-1} \frac{2^{2n-2}}{(2n)!}\, B_{2n} \binom{n}{m}$ und $B_n$ die n-te Bernoulli-Zahl ist und n! die Fakultät von n ist.

**3.** Verfahren nach Anspruch 2, worin die Summierung über *m* für *m* = 0 bis *m* = *M* ausgeführt wird.

**4.** Verfahren nach Anspruch 3, worin der Schritt des Bestimmens der vertikalen Partikelgeschwindigkeit das Bestimmen der vertikalen Komponente von Partikelgeschwindigkeit aus dem am Empfänger erfassten Druck gemäß folgender Gleichung umfasst:

$$v_z(\omega, x, y, z) \approx -\frac{i}{\rho \omega z}\left[F_0 + F_1\left(\frac{\partial^2}{\partial x^2} + \frac{\partial^2}{\partial y^2}\right) + F_2\left(\frac{\partial^2}{\partial x^2} + \frac{\partial^2}{\partial y^2}\right)^2\right]p(\omega, x, y, z),$$

wo $v_z$ die vertikale Komponente der Partikelgeschwindigkeit ist, $p$ das erfasste Druckwellenfeld ist, $\omega$ die Kreisfrequenz ist und $\rho$ die Dichte ist.

**5.** Verfahren nach Anspruch 4, worin der Schritt des Bestimmens der vertikalen Partikelgeschwindigkeit das Bestimmen der vertikalen Komponente von Partikelgeschwindigkeit aus dem am Empfänger erfassten Druck gemäß folgender Gleichung umfasst:

$$v_z(\omega, x, y, z) \approx -\frac{i}{\rho \omega z}\sum_{m=0}^{M} F_m(k, z)\left(\frac{\partial^2}{\partial x^2} + \frac{\partial^2}{\partial y^2}\right)^m p(\omega, x, y, z),$$

wo $F_m \approx k^{-2m} \sum_{n=m}^{N(m)} A_{nm} (kz)^{2n}$, $v_z$ die vertikale Komponente der Partikelgeschwindigkeit ist, p das erfasste Druckwellenfeld ist, $\omega$ die Kreisfrequenz ist, $k$ ( = $\omega/\alpha$) die Wellenzahl ist, $\alpha$ die P-Wellengeschwindigkeit ist, $\rho$ die Dichte ist, $A_{nm} = (-1)^{n-1}\frac{2^{2n-2}}{(2n)!}B_{2n}\binom{n}{m}$ und $B_n$ die *n*-te Bernoulli-Zahl ist und *n!* die Fakultät von *n* ist.

**6.** Verfahren nach Anspruch 4, worin der Schritt des Bestimmens der vertikalen Partikelgeschwindigkeit das Bestimmen der vertikalen Komponente von Partikelgeschwindigkeit aus dem am Empfänger erfassten Druck gemäß folgender Gleichung umfasst:

$$v_z(\omega, x, y, z) \approx -\frac{i}{\rho \omega z}\left[A_{00} + A_{10}(kz)^2 + A_{11}z^2\left(\frac{\partial^2}{\partial x^2} + \frac{\partial^2}{\partial y^2}\right)\right]p(\omega, x, y, z),$$

wo $A_{00}$ = 1 und $A_{10}$ = $A_{11}$ = -1/3, wo $v_z$ die vertikale Komponente der Partikelgeschwindigkeit ist, $p$ das erfasste Druckwellenfeld ist, $k$ (= $\omega/\alpha$) die Wellenzahl ist, $\alpha$ die P-Wellengeschwindigkeit ist, $\omega$ die Kreisfrequenz ist und $\rho$ die Dichte ist.

**7.** Verfahren nach Anspruch 2 und das Bestimmen der vertikalen Komponente von Partikelgeschwindigkeit aus dem Druck umfassend, der am Empfänger unter Verwendung der folgenden Gleichung oder einer davon abgeleiteten Gleichung erfasst wird:

$$v_z(\omega, x, y, z) \approx F_k\, p(\omega, x, y, z),$$

wo

$$\widetilde{F}_k = \min_{b_m, a_n} \sum_{k=-(K-1)}^{K-1} W_k\left|\frac{\Theta_{km}b_m}{\Phi_{kn}a_n} - F_k\right|^2$$

25

wo $a_0$ und $b_m$ die Rückwärts- und Vorwärtsfilterkoeffizienten sind, $W_k$ eine Menge von positiven Gewichten ist und $F_k = F(k\Delta k_x)$ die gewünschte diskrete horizontale Wellenzahlantwort bezeichnet.

8. Verfahren nach Anspruch 7 und das Bestimmen der vertikalen Komponente von Partikelgeschwindigkeit aus dem Druck umfassend, der am Empfänger unter Verwendung der folgenden Gleichung erfasst wird:

$$\widetilde{F}_k = \min_{g_m} \sum_{k=0}^{\kappa-1} W_k \left| \Gamma_{km} g_m - F_k \right|^2$$

wo $\Gamma_{km} = \cos(k\Delta k_x m\Delta x)$, $b_m = 0{,}5 g_m$ fiir $g_m = 1,2,...,M/2$ und $b_0 = g_0$.

9. Verfahren nach einem vorhergehenden Anspruch, worin die Daten an einem Empfänger erfasst wurden, der auf einem Streamer angeordnet ist, wobei das Verfahren außerdem den Schritt umfasst, dass eine Ableitung des Drucks in einer horizontalen Richtung senkrecht zum Streamer aus einer Ableitung des Drucks in einer horizontalen Richtung entlang dem Streamer bestimmt wird.

10. Verfahren nach Anspruch 9, worin der Schritt des Bestimmens einer Ableitung des Drucks in einer horizontalen Richtung senkrecht zum Streamer umfasst, dass die Gleichung

$$\frac{\partial^2}{\partial y^2} p(x_0, y_0) = \frac{1}{x_0} \frac{\partial}{\partial x} p(x_0, y_0)$$

verwendet wird, wo der Streamer entlang der x-Achse verläuft.

11. Verfahren nach einem der Ansprüche 1 bis 10 und den weiteren Schritt umfassend, die seismischen Daten unter Verwendung der vertikalen Komponente der Partikelgeschwindigkeit zu verarbeiten.

12. Verfahren nach Anspruch 11 und umfassend, dass die seismischen Daten verarbeitet werden, um mindestens eine einer aufwärtsgerichteten Komponente und einer abwärtsgerichteten Komponente der seismischen Daten zu bestimmen.

13. Verfahren nach Anspruch 11 und umfassend, dass die seismischen Daten unter Verwendung der vertikalen Komponente der Partikelgeschwindigkeit verarbeitet werden, um dadurch Einwirkungen auf die verarbeiteten Daten von seismischer Energie zu dämpfen, die an der freien Oberfläche der Wassersäule reflektiert und/oder gestreut wird.

14. Verfahren nach Anspruch 11 und umfassend:

   a) Entfernen der Direktankunft und ihrer assoziierten Phantomankunft aus den erfassten seismischen Daten;
   b) Trennen der nach Entfernung der Direktankunft und ihrer assoziierten Phantomankunft zurückbleibenden seismischen Daten in ihre aufwärtsgerichteten und abwärtsgerichteten Komponenten;
   c) Summieren der in Schritt (b) ermittelten abwärtsgerichteten Komponente und der Direktankunft und ihrer assoziierten Phantomankunft, um dadurch die abwärtsgerichtete Gesamtkomponente zu ermitteln; und
   d) Dividieren der in Schritt (b) ermittelten aufwärtsgerichteten Komponente durch die in Schritt (c) ermittelte abwärtsgerichtete Gesamtkomponente, um dadurch die Einwirkung von Mehrfachreflexionen auf die seismischen Daten zu dämpfen.

15. Verfahren nach Anspruch 11 und umfassend, dass die seismischen Daten unter Verwendung der vertikalen Komponente der Partikelgeschwindigkeit verarbeitet werden, um dadurch Information über die Signatur der Quelle von seismischer Energie zu ermitteln.

16. Verfahren nach einem der Ansprüche 1 bis 10, worin die seismischen Daten Druck- und Partikelgeschwindigkeitsdaten umfassen und worin das Verfahren außerdem umfasst, dass die aus dem erfassten Druck bestimmte vertikale Komponente der Partikelgeschwindigkeit mit den gemessenen Werten der Partikelgeschwindigkeit verglichen wird.

17. Verfahren nach einem der Ansprüche 1 bis 10, worin die seismischen Daten Druck- und Partikelgeschwindigkeitsdaten umfassen und worin das Verfahren außerdem den Schritt umfasst, dass die Tiefe des seismischen Empfängers innerhalb der Wassersäule aus der gemessenen vertikalen Komponente der Partikelgeschwindigkeit und der vertikalen Komponente der aus dem Druck bestimmten Partikelgeschwindigkeit bestimmt wird.

18. Verfahren nach Anspruch 4, 5 oder 6 oder einem der Ansprüche 9-17 in direkter oder indirekter Abhängigkeit von einem der Ansprüche 4, 5 oder 6 und umfassend, dass mindestens eine horizontale Ableitung des Druckwellenfeldes gemäß einem Verfahren bestimmt wird, das den Schritt der Fourier-Transformation des Druckwellenfeldes in die Wellenzahldomäne einschließt.

19. Verfahren zum Erfassen von marinseismischen Daten, folgende Schritte umfassend:

Betätigen eines Feldes von einer oder mehreren seismischen Quellen, um seismische Energie zu emittieren; Erfassen seismischer Daten an einem oder mehreren Empfängern, die innerhalb einer Wassersäule angeordnet sind, wobei die seismischen Daten mindestens Druckdaten einschließen; und Verarbeiten der erfassten Druckdaten gemäß einem Verfahren nach einem der Ansprüche 1 bis 18.

20. Vorrichtung zum Bestimmen einer vertikalen Komponente von Partikelgeschwindigkeit aus seismischen Daten, die an einem Empfänger erfasst werden, der innerhalb einer Wassersäule angeordnet ist, wobei die Vorrichtung umfasst:

ein Mittel zum Anwenden eines Operators auf die seismischen Daten, um die vertikale Komponente von Partikelgeschwindigkeit der seismischen Daten zu bestimmen, worin die seismischen Daten in einer Tiefe unter der Oberfläche der Wassersäule von mindestens dem 0,4-fachen der minimalen Wellenlänge von seismischer Energie erfasst werden, die von der zum Erfassen der seismischen Daten verwendeten seismischen Quelle emittiert wird, worin der Operator ein Raumfilter nutzt, das zum Verarbeiten von seismischen Daten auf der Basis der Tiefe des Empfängers konfiguriert ist.

21. Vorrichtung nach Anspruch 20 und ein Mittel umfassend zum Bestimmen der vertikalen Komponente von Partikelgeschwindigkeit aus dem Druck, der am Empfänger unter Verwendung der folgenden Gleichung oder einer davon abgeleiteten Gleichung erfasst wird:

$$v_z(\omega, x, y, z) = -\frac{i}{\rho \omega z} \sum_m F_m(k, z) D_2^m(x, y) * p(\omega, x, y, z),$$

wo $\omega$ die Kreisfrequenz ist, $k$ die Wellenzahl ist, $\alpha$ die P-Wellengeschwindigkeit ist, $\rho$ die Dichte ist, $D_2$ ein Differentialoperator ist, $F_m = F_m(k, z) = k^{-2m} \sum_{n=m}^{\infty} A_{n,m} (kz)^{2n}$ und * der 2D-Raum-Faltungsoperator ist.

22. Vorrichtung nach Anspruch 21 und dazu angepasst, die vertikale Komponente der Partikelgeschwindigkeit unter Verwendung eines bandbreitenbegrenzten Differentialoperators für $D_2$ zu bestimmen.

23. Vorrichtung nach Anspruch 21 oder 22 und dazu angepasst, die Summierung über $m$ von $m = 0$ bis $m = M$ auszuführen.

24. Vorrichtung nach Anspruch 23 und dazu angepasst, die vertikale Komponente von Partikelgeschwindigkeit aus dem am Empfänger erfassten Druck gemäß folgender Gleichung zu bestimmen:

$$v_z(\omega, x, y, z) \approx -\frac{i}{\rho \omega z}\left[ F_0 + F_1\left(\frac{\partial^2}{\partial x^2} + \frac{\partial^2}{\partial y^2}\right) + F_2\left(\frac{\partial^2}{\partial x^2} + \frac{\partial^2}{\partial y^2}\right)^2 \right] p(\omega, x, y, z).$$

25. Vorrichtung nach Anspruch 23 und dazu angepasst, die vertikale Komponente von Partikelgeschwindigkeit aus dem am Empfänger erfassten Druck gemäß folgender Gleichung zu bestimmen:

$$v_z(\omega, x, y, z) \approx -\frac{i}{\rho \omega z} \sum_{m=0}^{M} F_m\left(k, z\left(\frac{\partial^2}{\partial x^2} + \frac{\partial^2}{\partial y^2}\right)^m p(\omega, x, y, z),\right.$$

wo $F_m \approx k^{-2m} \sum_{n=m}^{N(m)} A_{nm} (kz)^{2n}$.

**26.** Vorrichtung nach Anspruch 23 und dazu angepasst, die vertikale Komponente von Partikelgeschwindigkeit aus dem am Empfänger erfassten Druck gemäß folgender Gleichung zu bestimmen:

$$v_z(\omega, x, y, z) \approx -\frac{i}{\rho \omega z}\left[A_{00} + A_{10}(kz)^2 + A_{11}z^2\left(\frac{\partial^2}{\partial x^2} + \frac{\partial^2}{\partial y^2}\right)\right]p(\omega, x, y, z),$$

wo $A_{00} = 1$ und $A_{10} = A_{11} = -1/3$.

**27.** Vorrichtung nach einem der Ansprüche 20 bis 26 zum Verarbeiten von an einem Empfänger erfassten Daten, der auf einem Streamer angeordnet ist, und außerdem dazu angepasst, eine Ableitung des Drucks in einer horizontalen Richtung senkrecht zum Streamer aus einer Ableitung des Drucks in einer Richtung entlang dem Streamer zu bestimmen.

**28.** Vorrichtung nach Anspruch 27 und dazu angepasst, eine Ableitung des Drucks in der zum Streamer senkrechten Richtung gemäß folgender Gleichung zu bestimmen:

$$\frac{\partial^2}{\partial y^2}p(x_0, y_0) = \frac{1}{x_0}\frac{\partial}{\partial x}p(x_0, y_0)$$

wo der Streamer entlang der x-Achse verläuft.

**29.** Vorrichtung nach einem der Ansprüche 20 bis 28 und dazu angepasst, die seismischen Daten unter Verwendung der vertikalen Komponente der Partikelgeschwindigkeit weiterzuverarbeiten.

**30.** Vorrichtung nach Anspruch 29 und dazu angepasst, die seismischen Daten unter Verwendung der vertikalen Komponente der Partikelgeschwindigkeit zu verarbeiten, um dadurch Einwirkungen auf die verarbeiteten Daten von seismischer Energie zu reduzieren, die an der Oberfläche der Wassersäule reflektiert und/oder gestreut wird.

**31.** Vorrichtung nach Anspruch 29 und dazu angepasst, die seismischen Daten unter Verwendung der vertikalen Komponente der Partikelgeschwindigkeit zu verarbeiten, um dadurch Information über die Signatur der Quelle von seismischer Energie zu ermitteln.

**32.** Vorrichtung nach einem der Ansprüche 20 bis 31 und einen programmierbaren Datenprozessor umfassend.

**33.** Speichermedium, ein Programm enthaltend, das beim Ausführen durch einen Datenprozessor bewirkt, dass der Datenprozessor ein Verfahren nach einem der Ansprüche 1 bis 18 ausführt.

**34.** Verfahren zum Bestimmen einer vertikalen Komponente von Partikelgeschwindigkeit nach Anspruch 1, worin das Raumfilter lokal und kompakt ist.


**Revendications**

**1.** Procédé de détermination d'une composante verticale de vitesse particulaire à partir de données sismiques acquises au niveau d'un récepteur agencé au sein d'une colonne d'eau, le procédé comprenant :

l'application d'un opérateur aux données sismiques, en vue de déterminer la composante verticale de vitesse particulaire des données sismiques, dans lequel les données sismiques sont acquises à une profondeur sous la surface de la colonne d'eau d'au moins 0,4 fois la longueur d'onde minimale d'énergie sismique émise par la source sismique utilisée pour acquérir les données sismiques, dans lequel l'opérateur utilise un filtre spatial configuré de manière à traiter des données sismiques sur la base la profondeur du récepteur.

**2.** Procédé de détermination d'une composante verticale de vitesse particulaire selon la revendication 1, comprenant la détermination de la composante verticale de vitesse particulaire à partir de la pression acquise au niveau du récepteur, au moyen de l'équation ci-dessous ou d'une équation dérivée de celle-ci :

$$v_z(\omega, x, y, z) = -\frac{i}{\rho \omega z} \sum_m F_m(k, z) D_z^m(x, y) * p(\omega, x, y, z),$$

où $v_z$ est la composante verticale de la vitesse particulaire, $p$ est le champ d'ondes de la pression acquise, $\omega$ est la fréquence angulaire, $k$ (= $\omega / \alpha$) est le nombre d'ondes, $\alpha$ est la vitesse d'onde P, $\rho$ est la densité, D2 est un opérateur différentiel, $F_m = F_m(k, z) = k^{-2m} \sum_{n=m}^{\infty} A_{nm}(kz)^{2n}$ et * est l'opérateur de convolution spatiale 2D,

où $A_{nm} = (-1)^{n-1} \frac{2^{2n} - 2}{(2n)!} B_{2n} \binom{n}{m}$ et $B_n$ est le nième nombre de Bernoulli et n! est la factorielle de n.

**3.** Procédé selon la revendication 2, dans lequel la sommation sur m est mise en oeuvre de m = 0 à m = M.

**4.** Procédé selon la revendication 3, dans lequel l'étape de détermination de la vitesse particulaire verticale comprend la détermination de la composante verticale de vitesse particulaire à partir de la pression acquise au niveau du récepteur, selon l'équation ci-dessous :

$$v_z(\omega, x, y, z) \approx -\frac{i}{\rho \omega z} \left[ F_0 + F_1 \left( \frac{\partial^2}{\partial x^2} + \frac{\partial^2}{\partial y^2} \right) + F_2 \left( \frac{\partial^2}{\partial x^2} + \frac{\partial^2}{\partial y^2} \right)^2 \right] p(\omega, x, y, z),$$

où $v_z$ est la composante verticale de la vitesse particulaire, $p$ est le champ d'ondes de la pression acquise, $\omega$ est la fréquence angulaire, et $\rho$ est la densité.

**5.** Procédé selon la revendication 4, dans lequel l'étape de détermination de la vitesse particulaire verticale comprend la détermination de la composante verticale de vitesse particulaire à partir de la pression acquise au niveau du récepteur, selon l'équation ci-dessous :

$$v_z(\omega, x, y, z) \approx -\frac{i}{\rho \omega z} \sum_{m=0}^{M} F_m(k, z) \left( \frac{\partial^2}{\partial x^2} + \frac{\partial^2}{\partial y^2} \right)^m p(\omega, x, y, z),$$

où $F_m \approx k^{-2m} \sum_{n=m}^{N(m)} A_{nm}(kz)^{2n}$, $v_z$ est la composante verticale de la vitesse particulaire, $p$ est le champ d'ondes de la pression acquise, $\omega$ est la fréquence angulaire, $k$ (= $\omega / \alpha$) est le nombre d'ondes, $\alpha$ est la vitesse d'onde P, $\rho$ est la densité, $A_{nm} = (-1)^{n-1} \frac{2^{2n} - 2}{(2n)!} B_{2n} \binom{n}{m}$ et $B_n$ est le nième nombre de Bernoulli et n! est la factorielle de n.

**6.** Procédé selon la revendication 4, dans lequel l'étape de détermination de la vitesse particulaire verticale comprend la détermination de la composante verticale de vitesse particulaire à partir de la pression acquise au niveau du récepteur, selon l'équation ci-dessous :

$$v_z(\omega, x, y, z) \approx -\frac{i}{\rho \omega z} \left[ A_{00} + A_{10}(kz)^2 + A_{11} z^2 \left( \frac{\partial^2}{\partial x^2} + \frac{\partial^2}{\partial y^2} \right) \right] p(\omega, x, y, z),$$

où $A_{00}$ = 1, et $A_{10} = A_{11}$ = -1/3, où $v_z$ est la composante verticale de la vitesse particulaire, $p$ est le champ d'ondes de la pression acquise, $k$ (= $\omega / \alpha$) est le nombre d'ondes, $\alpha$ est la vitesse d'onde P, $\omega$ est la fréquence angulaire et $\rho$ est la densité.

**7.** Procédé selon la revendication 2, comprenant la détermination de la composante verticale de vitesse particulaire à partir de la pression acquise au niveau du récepteur, au moyen de l'équation ci-dessous ou d'une équation dérivée de celle-ci :

$$v_z(\omega, x, y, z) \approx F_k\, p(\omega, x, y, z),$$

où

$$\widetilde{F}_k = \min_{b_m, a_n} \sum_{k=-(K-1)}^{K-1} W_k \left| \frac{\Theta_{km} b_m}{\Phi_{kn} a_n} - F_k \right|^2$$

où $a_n$ et $b_m$ sont les coefficients de filtre en amont et en aval, $W_k$ représente un ensemble de pondérations positives, et $F_k = F(k\Delta k_x)$ désigne la réponse discrète souhaitée du nombre d'ondes horizontales.

**8.** Procédé selon la revendication 7, comprenant la détermination de la composante verticale de vitesse particulaire à partir de la pression acquise au niveau du récepteur, au moyen de l'équation ci-dessous :

$$\widetilde{F}_k = \min_{g_m} \sum_{k=0}^{K-1} W_k \left| \Gamma_{km} g_m - F_k \right|^2$$

où = $\Gamma_m = \cos(k\Delta k_x m\Delta x)$, $b_m = 0,5\, g_m$ pour $g_m = 1, 2,..., M/2$ et $b_0 = g_0$.

**9.** Procédé selon l'une quelconque des revendications précédentes, dans lequel les données ont été acquises au niveau d'un récepteur agencé sur une flûte, le procédé comprenant en outre l'étape consistant à déterminer une dérivée de la pression dans une direction horizontale perpendiculaire à la flûte à partir d'une dérivée de la pression dans une direction horizontale le long de la flûte.

**10.** Procédé selon la revendication 9, dans lequel l'étape de détermination d'une dérivée de la pression dans une direction horizontale perpendiculaire à la flûte comprend l'utilisation de l'équation ci-dessous :

$$\frac{\partial^2}{\partial y^2} p(x_0, y_0) = \frac{1}{x_0} \frac{\partial}{\partial x} p(x_0, y_0)$$

où la flûte s'étend le long de l'axe x.

**11.** Procédé selon l'une quelconque des revendications 1 à 10, comprenant en outre l'étape consistant à traiter les données sismiques en utilisant la composante verticale de la vitesse particulaire.

**12.** Procédé selon la revendication 11, comprenant le traitement des données sismiques de façon à déterminer au moins l'une parmi une composante ascendante et une composante descendante des données sismiques.

**13.** Procédé selon la revendication 11, comprenant le traitement des données sismiques au moyen de la composante verticale de la vitesse particulaire, de manière à atténuer par conséquent les effets, dans les données traitées, de l'énergie sismique réfléchie et/ou diffusée au niveau de la surface libre de la colonne d'eau.

**14.** Procédé selon la revendication 11, comprenant

a) la suppression de l'arrivée directe et de son arrivée fantôme associée des données sismiques acquises ;
b) la séparation des données sismiques subsistant après l'élimination de l'arrivée directe et de son arrivée fantôme associée, en leurs composantes ascendantes et descendantes ;
c) la sommation de la composante descendante obtenue à l'étape (b) et de l'arrivée directe et de son arrivée fantôme associée, en vue d'obtenir par conséquent la composante descendante totale ; et

d) la division de la composante ascendante obtenue à l'étape (b) par la composante descendante totale obtenue à l'étape (c), de manière à atténuer par conséquent l'effet de réflexions multiples dans les données sismiques.

15. Procédé selon la revendication 11, comprenant le traitement des données sismiques au moyen de la composante verticale de la vitesse particulaire, de manière à obtenir par conséquent des informations sur la signature de la source d'énergie sismique.

16. Procédé selon l'une quelconque des revendications 1 à 10, dans lequel les données sismiques comportent des données de pression et de vitesse particulaire, et dans lequel le procédé comprend en outre la comparaison de la composante verticale de la vitesse particulaire, déterminée à partir de la pression acquise, aux valeurs mesurées de la vitesse particulaire.

17. Procédé selon l'une quelconque des revendications 1 à 10, dans lequel les données sismiques comportent des données de pression et de vitesse particulaire, et dans lequel le procédé comprend en outre l'étape consistant à déterminer la profondeur du récepteur sismique au sein de la colonne d'eau à partir de la composante verticale mesurée de la vitesse particulaire et de la composante verticale de la vitesse particulaire déterminée à partir de la pression.

18. Procédé selon la revendication 4, 5 ou 6, ou selon l'une quelconque des revendications 9 à 17, lorsqu'elles dépendent directement ou indirectement de l'une des revendications 4, 5 ou 6, comprenant la détermination d'au moins une dérivée horizontale du champ d'onde de pression selon un procédé comprenant l'étape de transformée de Fourier du champ d'onde de pression en le domaine du nombre d'ondes.

19. Procédé d'acquisition de données sismiques marines, comprenant les étapes ci-dessous consistant à :

actionner un ensemble d'une ou plusieurs sources sismiques en vue d'émettre de l'énergie sismique ;
acquérir des données sismiques au niveau d'un ou plusieurs récepteurs agencés dans une colonne d'eau, les données sismiques incluant au moins des données de pression ; et
traiter les données de pression acquises conformément à un procédé selon l'une quelconque des revendications 1 à 18.

20. Dispositif destiné à déterminer une composante verticale de vitesse particulaire à partir de données sismiques acquises au niveau d'un récepteur agencé au sein d'une colonne d'eau, le dispositif comprenant :

un moyen pour appliquer un opérateur aux données sismiques, en vue de déterminer la composante verticale de vitesse particulaire des données sismiques, dans lequel les données sismiques sont acquises à une profondeur sous la surface de la colonne d'eau d'au moins 0,4 fois la longueur d'onde minimale d'énergie sismique émise par la source sismique utilisée pour acquérir les données sismiques, dans lequel l'opérateur utilise un filtre spatial configuré de manière à traiter des données sismiques sur la base la profondeur du récepteur.

21. Dispositif selon la revendication 20, comprenant un moyen pour déterminer la composante verticale de vitesse particulaire à partir de la pression acquise au niveau du récepteur, au moyen de l'équation ci-dessous ou d'une équation dérivée de celle-ci :

$$v_z(\omega, x, y, z) = -\frac{i}{\rho \omega z} \sum_m F_m(k, z) D_2^m(x, y) * p(\omega, x, y, z),$$

où $\omega$ est la fréquence angulaire, k est le nombre d'ondes, $\alpha$ est la vitesse d'onde P, $\rho$ est la densité, D2 est un opérateur différentiel, $F_m = F_m(k, z) = k^{-2m} \sum_{n=m}^{\infty} A_{nm}(kz)^{2n}$ et * est l'opérateur de convolution spatiale 2D.

22. Dispositif selon la revendication 21, apte à déterminer la composante verticale de la vitesse particulaire en utilisant un opérateur différentiel à largeur de bande limitée pour D2.

23. Dispositif selon la revendication 21 ou 22, apte à mettre en oeuvre la sommation sur m de m = 0 à m = M.

**24.** Dispositif selon la revendication 23, apte à déterminer la composante verticale de vitesse particulaire à partir de la pression acquise au niveau du récepteur selon l'équation ci-dessous :

$$v_z(\omega, x, y, z) \approx -\frac{i}{\rho \omega z}\left[F_0 + F_1\left(\frac{\partial^2}{\partial x^2} + \frac{\partial^2}{\partial y^2}\right) + F_2\left(\frac{\partial^2}{\partial x^2} + \frac{\partial^2}{\partial y^2}\right)^2\right]p(\omega, x, y, z).$$

**25.** Dispositif selon la revendication 23, apte à déterminer la composante verticale de vitesse particulaire à partir de la pression acquise au niveau du récepteur selon l'équation ci-dessous :

$$v_z(\omega, x, y, z) \approx -\frac{i}{\rho \omega z}\sum_{m=0}^{M} F_m(k, z)\left(\frac{\partial^2}{\partial x^2} + \frac{\partial^2}{\partial y^2}\right)^m p(\omega, x, y, z),$$

où

$$F_m \approx k^{-2m}\sum_{n=m}^{N(m)} A_{nm}(kz)^{2n}.$$

**26.** Dispositif selon la revendication 23, apte à déterminer la composante verticale de vitesse particulaire à partir de la pression acquise au niveau du récepteur selon l'équation ci-dessous :

$$v_z(\omega, x, y, z) \approx -\frac{i}{\rho \omega z}\left[A_{00} + A_{10}(kz)^2 + A_{11}z^2\left(\frac{\partial^2}{\partial x^2} + \frac{\partial^2}{\partial y^2}\right)\right]p(\omega, x, y, z),$$

où

$$A_{00} = 1, \text{ et } A_{10} = A_{11} = -1/3.$$

**27.** Dispositif selon l'une quelconque des revendications 20 à 26, destiné à traiter des données acquises au niveau d'un récepteur agencé sur une flûte, et en outre apte à déterminer une dérivée de la pression dans une direction horizontale perpendiculaire à la flûte, à partir d'une dérivée de la pression dans une direction le long de la flûte.

**28.** Dispositif selon la revendication 27, apte à déterminer une dérivée de la pression dans la direction perpendiculaire à la flûte selon l'équation ci-dessous :

$$\frac{\partial^2}{\partial y^2}p(x_0, y_0) = \frac{1}{x_0}\frac{\partial}{\partial x}p(x_0, y_0)$$

où la flûte s'étend le long de l'axe x.

**29.** Dispositif selon l'une quelconque des revendications 20 à 28, apte à traiter en outre les données sismiques en utilisant la composante verticale de la vitesse particulaire.

**30.** Dispositif selon la revendication 29, apte à traiter les données sismiques en utilisant la composante verticale de la vitesse particulaire, de manière à réduire par conséquent les effets, dans les données traitées, de l'énergie sismique réfléchie et/ou diffusée au niveau de la surface de la colonne d'eau.

**31.** Dispositif selon la revendication 29, apte à traiter les données sismiques en utilisant la composante verticale de la vitesse particulaire, de manière à obtenir par conséquent des informations sur la signature de la source de l'énergie sismique.

**32.** Dispositif selon l'une quelconque des revendications 20 à 31, comprenant un processeur de données programmable.

**33.** Support de stockage contenant un programme qui, lorsqu'il est exécuté par un processeur de données, amène le processeur de données à exécuter un procédé selon l'une quelconque des revendications 1 à 18.

**34.** Procédé de détermination d'une composante verticale de vitesse particulaire selon la revendication 1, dans lequel le filtre spatial est local et compact.

FIG 1

EP 1 474 705 B1

Amplitude spectrum of a 12m Ghost filter

FIG 2

9 Acquire seismic data

10 Retrieve seismic data

11 $V_z$ for $j^{th}$ receiver

12 Determine $\widetilde{P}$

13 Output / store $\widetilde{P}$

15 Select new time

14 Repeat for new time ? — Yes

17 Select new receiver

16 Repeat for new receiver ? — Yes / No

19 Select new streamer

18 Repeat for new streamer ? — Yes / No

End

FIG 3

36

Schematic plan view (xy-plane)of streamer
in the in-line x-direction with the source (1)
marked as a star and one receiver ($S_i$ )
measuring pressure marked as a triangle.

FIG 4

FIG 5(a)

Method I - Nominal streamer depth of 6.0 m

FIG 5(b)

Method II - Nominal streamer depth of 6.0 m

FIG 5(c)

95.0 % amplitude error

FIG 5(d)

95.0 % phase error

FIG.5(a) to 5(d): Rough-sea deghosting results for a nominal streamer depths of 6.0 m.Method I is the original method of Robertsson and Kragh (2001) whereas Method II is the new method.

FIG 6(a)

Method I - Nominal streamer depth of 10.0 m

FIG 6(b)

Method II - Nominal streamer depth of 10.0 m

FIG 6(c)

95.0 % amplitude error

FIG 6(d)

95.0 % phase error

FIG.6(a) to 6(d): Rough-sea deghosting results for a nominal streamer depths of 10.0 m.Method I is the original method of Robertsson and Kragh (2001) whereas Method II is the new method.

FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 0015810 A
- GB 9906456 A

### Non-patent literature cited in the description

- **E.KRAGH ; R.LAWS.** Rough seas and statistical deconvolution. *62nd Annual EAGE Meeting,* 2001
- **R.LAWS ; E.KRAGH.** Time-lapse seismic and the rough sea wavelet. *70th Ann. Int. Mtg of Soc. Exploration Geophysicists,* 2000, 1603-1606
- **L.AMUNDSEN.** *Geophysics,* 1993, vol. 58, 1335-1348
- **J.O.A.ROBERTSSON ; E.KRAGH.** Rough sea deghosting using a single streamer and a pressure gradient approximation. *Geophysics,* 2001
- **RØSTEN et al.** Rough sea deghosting using a vertical particle velocity field approximation. *63rd Annual EAGE meeting*
- **L. AMUNDSEN et al.** *Geophysics,* 1995, vol. 60, 212-222
- **L. AMUNDSE.** Elimination of free-surface related multiples without need of the source wavelet. *Geophysics,* 2001, vol. 66, 327-341
- **L. AMUNDSEN.** *Geophysics,* 1993, vol. 56, 1027-1039
- **A.OSEN et al.** Towards optimal spatial filters for demultiple and wavefield splitting of ocean bottom seismic data. *Geophysics,* 2002
- **L.AMUNDSEN et al.** *Geophysics,* 1995, vol. 60, 212-222
- **S.MALLICK ; L.N.FRAZER.** *Geophysics,* 1987, vol. 52, 1355-1364
- **L.AMUNDSEN ; B. URSIN.** *Geophysics,* 1991, vol. 56, 1027-1039